# EUROPEAN PATENT APPLICATION

(11) **EP 1 595 583 A1**
(43) Date of publication of application: **16.11.2005**
(21) Application number: 04712743.6
(22) Date of filing: 19.02.2004
(51) Int. Cl.: A63F 13/00

(54) **COMPUTER-READABLE RECORDING MEDIUM WHERE GAME BILLING PROGRAM IS RECORDED AND VIDEO DAME DEVICE**

(30) Priority: 19.02.2003 JP 2003041822; 17.02.2004 JP 2004039471
(71) Applicant: Konami Corporation, Chiyoda-ku, Tokyo 100-6330 (JP)
(72) Inventor: INOUE, Yoshihisa, C/o Konami Corporation, Tokyo 100-6330 (JP); FUJIWARA, Yutaka, C/o Konami Corporation, Tokyo 100-6330 (JP); FUKUDA, Yoshito, C/o Konami Corporation, Tokyo 100-6330 (JP); ODA, Masahiko, C/o Konami Corporation, Tokyo 100-6330 (JP); NISHIYAMA, Masahiro, C/o Konami Corporation, Tokyo 100-6330 (JP); KITAKAZE, Yusuke, C/o Konami Corporation, Tokyo 100-6330 (JP)
(74) Representative: Müller-Boré & Partner Patentanwälte
(86) International application number: PCT/JP2004/001901
(87) International publication number: WO 2004/082787

(57) **Abstract**

A CPU 211 includes: a distance calculation section 211a which calculates a distance by which an automobile moves along a course in a game space; a gas-mileage calculation section 211b which calculates a gas mileage of the automobile; a charged-money calculation section 211c which calculates a fuel quantity which is virtually consumed by dividing the gas mileage into the movement distance and calculates a charged sum of money using this fuel quantity.

## Description

### Technical Field

The present invention relates to a computer-readable recording medium in which a game money-charging program is recorded which charges a player a sum of money for a game where a vehicle that virtually consumes fuel is moved in a game space, and a video game apparatus for the same purpose.

### Background Art

Conventionally, a racing game, a flight simulation game, or the like, are popular as a game in which a vehicle that virtually consumes fuel is moved in a game space. In the case where a player plays a game using a game machine which is provided in an amusement arcade or the like, when starting the game, the player puts a predetermined amount of money for a play into the game machine. Thereby, the player can play the game.

However, in such a conventional game machine, the charge for a play is roughly set, which cannot necessarily satisfy players. For example, in a racing game which simulates a car race where cars run on a circuit course, a play charge is set in proportion to the number of times at which a car runs on the circuit course. Hence, the charge for a play is set regardless of the length of the circuit course, and thus, many players cannot accept such a charge.

In addition, in a racing game, a player can usually choose a high-power and poor-mileage engine, or a low-power and good-mileage engine. However, in a conventional play-charge setting method, a high-power and poor-mileage engine is more favorable. This tends to make the choice of an engine meaningless and tasteless.

In view of the above described disadvantages, it is an object of the present invention to provide a computer-readable recording medium in which a money-charging program is recorded and a video game apparatus which are capable of setting a play charge which can be accepted by a player.

### Disclosure of the Invention

In order to attain the above described object, a computer-readable recording medium in which a game money-charging program is recorded according to the present invention, the game money-charging program charging a player a sum of money for a game in which a vehicle that virtually consumes fuel is moved in a game space, characterized in that a computer is rendered to function as: a distance calculating means for calculating a distance by which the vehicle moves along a predetermined route that is set in advance in the game space; a gas-mileage calculating means for calculating a gas mileage of the vehicle; and a charged-money calculating means for calculating the quantity of fuel which is virtually consumed by dividing the gas mileage into the movement distance and calculating a charged sum of money based on this quantity of fuel.

According to this program, the distance calculating means calculates a distance by which the vehicle moves along a predetermined route that is set in advance in the game space. The gas-mileage calculating means calculates a gas mileage of the vehicle. Then, the charged-money calculating means calculates the quantity of fuel which is virtually consumed by dividing the gas mileage into the movement distance and calculates a charged sum of money based on this quantity of fuel.

Therefore, the charged amount of money is calculated based on the quantity of fuel which is virtually consumed, and this charge setting can satisfy a player. For example, if the charged amount is calculated substantially in proportion to the quantity of fuel which is virtually consumed, such a charge setting becomes acceptable to the player.

### Brief Description of the Drawings

Fig. 1 is a perspective view of an example of a game system according to the present invention.
Fig. 2 is a block diagram, showing an example of the configuration of the game system.
Fig. 3 is a perspective view of an example of a client terminal apparatus according to the present invention.
Fig. 4 is a perspective partially-enlarged view of an example of the client terminal apparatus.
Fig. 5 is a block diagram, showing an example of the functional configuration of the client terminal apparatus.
Fig. 6 is a block diagram, showing an example of the functional configuration of a control section.
Fig. 7 is a perspective view of an example of a server apparatus.
Fig. 8 is a block diagram, showing an example of the functional configuration of the server apparatus.
Fig. 9 is a block diagram, showing an example of the functional configuration of the control section.
Fig. 10 is a flow chart, showing an example of the operation of the client terminal apparatus.
Fig. 11 is a flow chart, specifically showing an example of a gas-mileage calculation in a step S119 of the flow chart shown in Fig. 10.
Fig. 12 is a table, showing an example of a table data which is used for a gas-mileage calculation in a step S205 of the flow chart shown in Fig. 11.
Fig. 13 is a flow chart, specifically showing an example of a charged-money calculation in a step S121 of the flow chart shown in Fig. 10.
Fig. 14 is a flow chart, showing an example of the operation of the server apparatus.
Fig. 15 is a representation, showing an example of a racing game.
Fig. 16 is a representation, showing an example of a held race image which is displayed in a monitor of the server apparatus to notify players and spectators that a race is to be held.
Fig. 17 is a representation, showing an example of a course selection image which is displayed in a monitor of the client terminal apparatus in a step S101 of the flow chart shown in Fig. 10.
Fig. 18 is a representation, showing an example of a license-card insertion instruction image which is displayed in the monitor of the client terminal apparatus in a step S105 of the flow chart shown in Fig. 10.
Fig. 19 is a representation, showing an example of a machine-card insertion instruction image which is displayed in the monitor of the client terminal apparatus in a step S109 of the flow chart shown in Fig. 10.
Fig. 20 is a representation, showing an example of a parts selection image which is displayed in the monitor of the client terminal apparatus in a step S115 of the flow chart shown in Fig. 10.
Fig. 21 is a representation, showing an example of an engine selection image which is displayed in the monitor of the client terminal apparatus in the step S115 of the flow chart shown in Fig. 10.
Fig. 22 is a representation, showing an example of a coin-addition request image which is displayed in the monitor of the client terminal apparatus in a step S123 of the flow chart shown in Fig. 10.
Fig. 23 is a representation, showing an example of a game-execution permission image which is displayed in the monitor of the client terminal apparatus in a step S127 of the flow chart shown in Fig. 10.
Fig. 24 is a representation, showing an example of a game image which is displayed in the monitor of the server apparatus while a game is in execution.
Fig. 25 is a representation, showing an example of a goal image which is displayed in the monitor of the server apparatus while the game is in execution.
Fig. 26 is a representation, showing an example of a game image which is displayed in the monitor of the client terminal apparatus while the game is in execution.
Fig. 27 is a block diagram, showing an example of the functional configuration of a control section of the client terminal apparatus.
Fig. 28 is a flow chart, showing an example of the operation of the client terminal apparatus.
Fig. 29 is a representation, showing an example of a course selection image which is displayed in the monitor in a step S507 of the flow chart shown in Fig. 28.
Fig. 30 is a block diagram, showing an example of the functional configuration of the control section of the client terminal apparatus.
Figs. 31A and 31B are a flow chart, showing an example of the operation of the client terminal apparatus.
Fig. 32 is a flow chart, specifically showing an example of a remaining gasoline-quantity calculation processing in a step S613 of the flow chart shown in Figs. 31A and 31B.
Figs. 33A, 33B, 33C are each a graphical representation, showing an example of the correlation between the revolution rate of an engine, the road-surface slope and the road-surface condition of a course, and gas-mileage correction coefficients α, β, γ, respectively.
Fig. 34 is a representation, showing an example of a game image which is displayed in the monitor of the client terminal apparatus while the game is in execution.

### Best Mode for Implementing the Invention

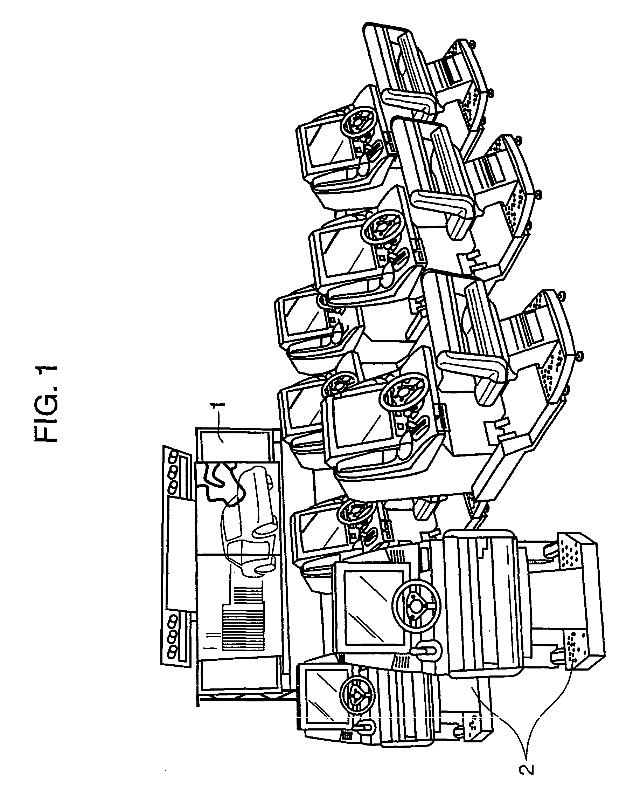

Hereinafter, an example of the embodiment of the present invention will be described using Fig. 1 to Fig. 26.

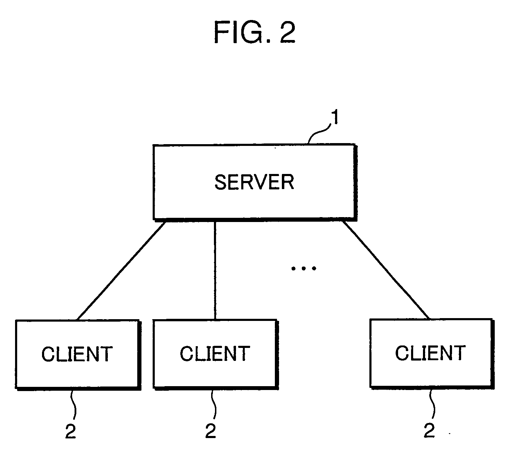

Fig. 1 is a perspective view of an example of a game system according to the present invention. Fig. 2 is a block diagram, showing an example of the configuration of the game system. The game system includes a server apparatus 1 which controls the progress of a game, and a plurality of (herein, eight) client terminal apparatuses 2 (which each correspond to the video game apparatus) which are communicably connected to the server apparatus 1 and are operated by a player. Herein, a game which is executed in this game system is a racing game in which an automobile (which corresponds to the vehicle) virtually runs a predetermined number of times (e.g., ten times) on a circuit course to compete for ranking.

The server apparatus 1 accepts operation-input information from each client terminal apparatus 2 and controls the progress of the game. Using the operation-input information from each client terminal apparatus 2, the server apparatus 1 calculates the position of an automobile body. Then, it transmits information on the vehicle-body position to the client terminal apparatus 2. Thereby, the image and sound of the game which is displayed in several client terminal apparatuses 2 which are playing the game in the same game space can be synchronized. Herein, the vehicle-body position includes the position of a vehicle body on a course, the direction of a vehicle body, and the inclination in the front-and-rear directions and the right-and-left directions of a vehicle body.

The client terminal apparatus 2 accepts various operation inputs and the insertion of a coin from a player, so that the player can play the game. Besides, it transmits the operation-input information or the like to the server apparatus 1. In addition, the client terminal apparatus 2 accepts the vehicle-body position information from the server apparatus 1. Then, it forms and displays a game image and produces and outputs a game sound and voice.

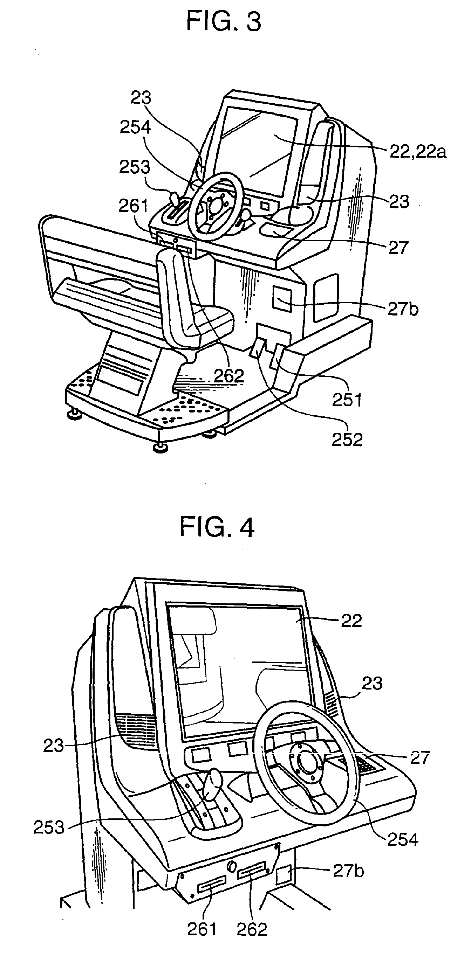

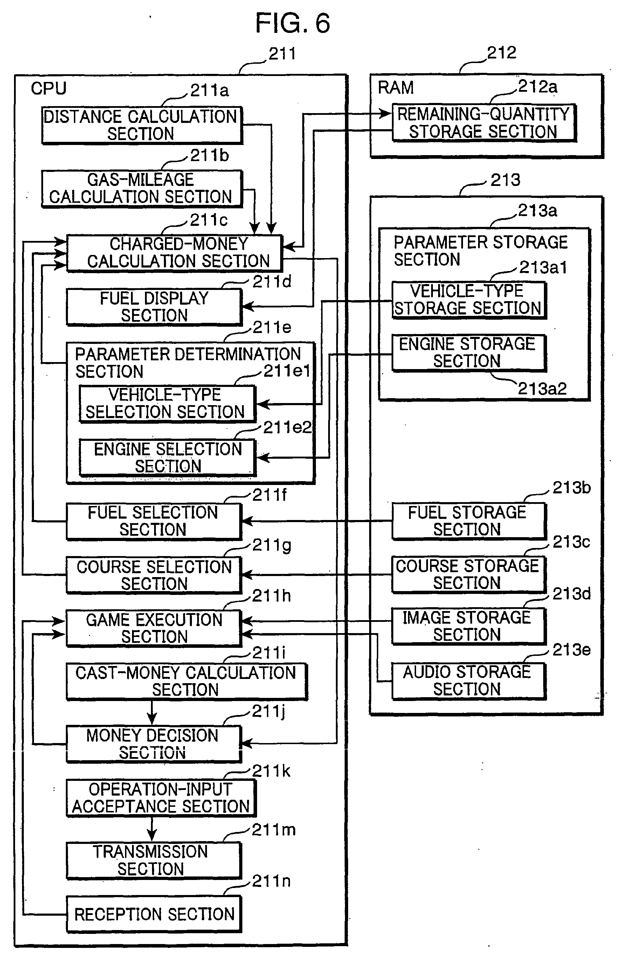

Fig. 3 is a perspective view of an example of the client terminal apparatus 2 according to the present invention. Fig. 4 is a perspective partially-enlarged view of an example of the client terminal apparatus 2. The client terminal apparatus 2 includes: a monitor 22 which displays a game image; a touch panel 22a which decides which button has been given an instruction, using the address of a button for prompting the choice or the like of a game image that is displayed in the monitor 22 and the position which is pressed by the player; a speaker 23 which outputs a sound and voice; an accelerator 251 which is a means for operating a virtual automobile; a brake 252; a shift lever 253; a steering wheel 254; a license-card reader 261 and a machine-card reader 262 which read information of a license card and a machine card (described later), respectively; a coin acceptance section 27 which accepts a coin as a charge for a game by a player; and a defective-coin outlet 27b which discharges a defective coin. Besides, the client terminal apparatus 2 includes a control section 21 (see Fig. 6) which is formed by a microcomputer or the like that outputs a detection signal from each section or a control signal to each section, and a multi-coin selector 27a which decides the kind (e.g., a 10-yen coin, a 50-yen coin, a 100-yen coin and a 500-yen coin) of a coin that is accepted in the coin acceptance section 27 and counts a cast sum of money.

Herein, the accelerator 251, the brake 252, the shift lever 253 and the steering wheel 254 are imitations of the accelerator, brake, shift lever and steering wheel of a real automobile. For example, they are configured so that the more a player steps on the accelerator, the greater the revolution rate of an engine virtually becomes (as described later, this function is realized by a game execution section 211h).

Herein, the license card and the machine card are described. The license card and the machine card are each a magnetic card (or an IC card) which is issued by a card issuance unit (not shown). In the license card, there is stored a user ID; a driver's rank which indicates ranking for a driving technique; a record in a past race; an acquired point; or the like. In the machine card, there is stored the name of a player; a user ID; a password; information on the type of an automobile; information on the type of the engine of an automobile; or the like.

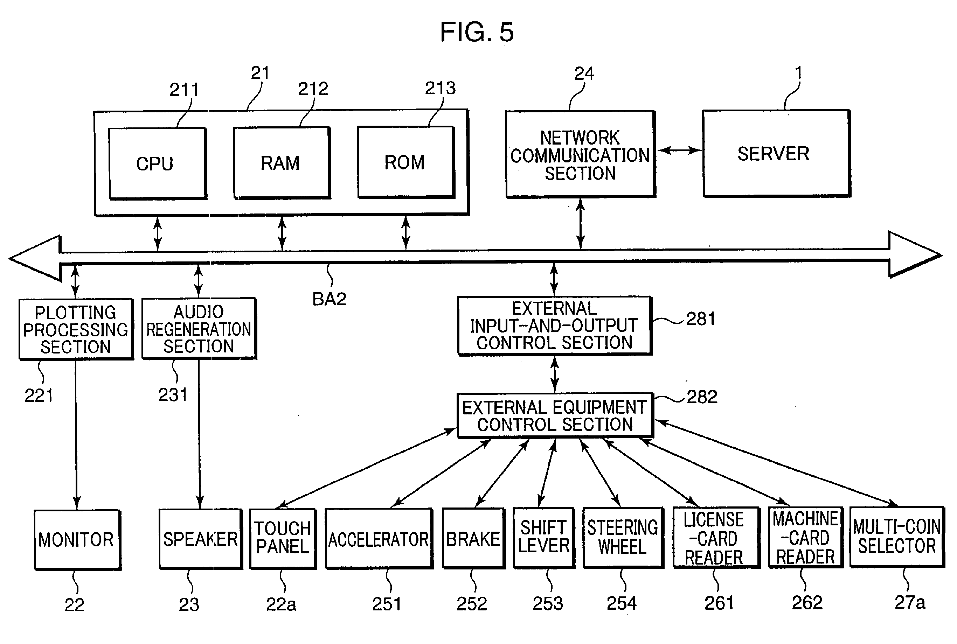

Fig. 5 is a block diagram, showing an example of the functional configuration of the client terminal apparatus 2. The control section 21 controls the total operation of the client terminal apparatus 2. It includes: an information processing section (or CPU) 211; an RAM 212 which stores information temporarily in the middle of a processing; an ROM 213 in which predetermined image information, a game program and the like (described later) are stored in advance.

Herein, the game money-charging program according to the present invention, in the same way as a game program, is recorded in the ROM 213. It is loaded on the RAM 212, an operation which is executed via the touch panel 22a or the like by a player is accepted, and the game money-charging program on the RAM 213 is successively executed by the CPU 211, so that each function can be realized.

An external input-and-output control section 281 is provided between the control section 21 and a detection section which includes the touch panel 22a, the accelerator 251, the brake 252, the shift lever 253, the steering wheel 254, the license-card reader 261, the machine-card reader 262 and the multi-coin selector 27a. Between them, it converts a detection signal into a digital signal for processing and converts instruction information into a control signal to output it to each piece of equipment of the detection section. It executes these signal processing and input-and-output processing, for example, in the form of time sharing. During each time-sharing period, the external input-and-output control section 281 executes an operation in which the control signal is outputted to each piece of equipment of the detection section and an operation in which the detection signal is inputted from each piece of equipment of the detection section. Herein, the accelerator 251, the brake 252, the shift lever 253 and the steering wheel 254 are each provided with a detector which detects how much each piece of equipment has been operated.

A plotting processing section 221 displays a required image in the monitor 22 according to an image display instruction from the control section 21. It includes a video RAM or the like. An audio regeneration section 231 outputs a predeterminedmassage, BGM or the like to speaker 23 according to an instruction from the control section 21.

The touch panel 22a is a rectangular thin-layer body. It is formed by a pressure material which is made of a line-shaped transparent material and is disposed lengthwise and breadthways at a predetermined pitch, a transparent cover which coats it, or the like. It is stuck on the screen of the monitor 22. As this touch panel 11a, a publicly-known panel can be used. Using the address and pressing position of a button for prompting a choice or the like which is displayed on the screen of the monitor 22, a decision can be made which button has been given an instruction.

In the ROM 213, there are stored an automobile image, a background image, various screen images, and the like. The automobile image, the a background image, or the like, is formed by a required number of polygons, so that they can be three-dimensionally plotted. Based on a plotting instruction from the CPU 211, the plotting processing section 221 executes a calculation for converting a position in the three-dimensional space into a position in a pseudo three-dimensional space, a light-source calculation processing, or the like. In addition, Based on this calculation result, it executes a processing for writing image data to be plotted in a video RAM, for example, a processing for writing (attaching) texture data in the area of a video RAM which is designated by the polygon.

Among various kinds of data which are stored in the ROM 213, data which can be stored in an attachable and detachable recording medium may also be read, for example, by a driver, such as a hard disk drive, an optical disk drive, a flexible disk drive, a silicon disk drive and a cassette medium reader. In that case, the recording medium is, for example, a hard disk drive, an optical disk drive, a flexible disk drive, a CD, a DVD, a semiconductor memory, or the like.

A network communication section 24 transmits and receives via a network, to and from the server apparatus 1, various types of event information which are produced while an raving game is in execution.

Fig. 6 is a block diagram, showing an example of the functional configuration of the control section 21. The CPU 211 includes: a distance calculation section 211a (which corresponds to the distance calculating means) which calculates a distance by which an automobile moves along a course in a game space which is chosen by a course selection section 211g (described later); a gas-mileage calculation section 211b (which corresponds to the gas-mileage calculating means) which calculates the gas mileage of an automobile; a charged-money calculation section 211c (which corresponds to the charged-money calculating means) which calculates the quantity of fuel which is virtually consumed by dividing the gas mileage into the movement distance and calculates a charged sum of money by multiplying this quantity of fuel by the unit price of fuel which is uniquely determined according to the type of fuel which is chosen by a fuel selection section 211f (described later); a fuel display section 211d (which corresponds to the fuel displaying means) which displays the remaining quantity of fuel in the monitor 22; and a parameter determination section 211e (which corresponds to the parameter determining means) which accepts an input from the touch panel 22a and determines a parameter that decides the gas mileage of an automobile.

In addition, the CPU 211 includes: a fuel selection section 211f (which corresponds to the fuel selecting means) which accepts an input from the touch panel 22a and selects a kind of fuel from among a plurality of kinds of fuels which are stored in a fuel storage section 213b (described later); a course selection section 211g (which corresponds to the course selecting means) which accepts an input from the touch panel 22a and selects a course from among a plurality of courses which are stored in a course storage section 213c (described later); a game execution section 211h (which corresponds to the game executing means) which accepts an input from the touch panel 22a, the accelerator 251, the brake 252, the shift lever 253 and the steering wheel 254 and proceeds with the game; a cast-money calculation section 211i (which corresponds to the cast-money calculating means) which calculates a cast sum of money which is the amount of a coin that is cast into the coin acceptance section 27; a money decision section 211j (which corresponds to the money deciding means) which decides whether or not the cast money that is calculated by the cast-money calculation section 211 is equal to, or more than, the charged money that is calculated by the charged-money calculation section 211c; an operation-input acceptance section 211k which accepts an input from the touch panel 22a, the accelerator 251, the brake 252, the shift lever 253, the steering wheel 254, the license-card reader 261, the machine-card reader 262 and the multi-coin selector 27a; a transmission section 211m which transmits, to the server apparatus 1, the operation-input information that is accepted by the operation-input acceptance section 211k; and a reception section 211n which receives various types of information such as information on a vehicle-body position from the server apparatus 1.

Furthermore, the parameter determination section 211e includes: a vehicle-type selection section 211e1 (which corresponds to the vehicle selection section) which accepts an input from the touch panel 22a and selects a type of vehicle from among several types of vehicles which are stored in a vehicle-type storage section 213a1 (described later); and an engine selection section 211e2 (which corresponds to the formation-element selection section) which accepts an input from the touch panel 22a and selects a kind of engine from among a plurality of kinds of engines which are stored in an engine storage section 213a2 (described later).

The RAM 212 includes a remaining-quantity storage section 212a (which corresponds to the remaining-quantity storing means) which stores the remaining quantity of fuel. The ROM 213 includes: a parameter storage section 213a (which corresponds to the parameter storing means) which stores a parameter which determines the gas mileage of a vehicle; a fuel storage section 213b (which corresponds to the fuel storing means) which stores in advance identification information on the kind of fuel which is virtually consumed in the vehicle; a course storage section 213c (which corresponds to the course storing means) which stores in advance route information on a plurality of courses; an image storage section 213d which stores in advance image information such as an automobile object and a background image; and an audio storage section 213e which stores in advance a voice that is outputted to the speaker 23.

Moreover, the parameter storage section 213a includes a vehicle-type storage section 213a1 (which corresponds to the vehicle storage section) which stores in advance identification information on a plurality of kinds of vehicles, and an engine storage section 213a2 (which corresponds to the formation-element storage section) which stores in advance identification information on a plurality of kinds of engines.

The distance calculation section 211a calculates a distance by which an automobile moves along a course in a game space which is chosen by the course selection section 211g. Herein, the course which is chosen by the course selection section 211g is a circuit course, and the number of laps is set beforehand. Hence, the distance calculation section 211a can calculate a distance by which an automobile moves by multiplying the entire length of a circuit course by the number of laps.

The gas-mileage calculation section 211b calculates the gas mileage of an automobile, using information on a type of vehicle which is selected by the vehicle-type selection section 211e1 and engine information on an engine which is selected by the engine selection section 211e2. For example, it calculates the gas mileage, using vehicle-weight information of the vehicle-type information and the displacement of an engine of the engine information.

The charged-money calculation section 211c calculates the quantity of fuel which is virtually consumed by dividing the gas mileage that is calculated by the gas-mileage calculation section 211b into the movement distance that is calculated by the distance calculation section 211a and calculates a charged sum of money by multiplying this quantity of fuel by the unit price of fuel which is uniquely determined according to the type of fuel which is chosen by the fuel selection section 211f.

The fuel display section 211d reads the remaining quantity of fuel in a virtual automobile from the remaining-quantity storage section 212a and displays it in the monitor 22. Herein, it displays the remaining quantity of fuel in the monitor 22 when a game starts and ends.

The vehicle-type selection section 211e1 accepts an input from the touch panel 22a and selects a type of vehicle from among several types of vehicles which are stored in the vehicle-type storage section 213a1. Herein, if a machine card is inserted in the machine-card reader 262, the automobile type which is stored in the machine card is chosen. Unless a machine card is inserted in the machine-card reader 262, from among the several (herein, three) types of rent-a-cars which are stored in the vehicle-type storage section 213a1, a vehicle type which is desired by a player is chosen by detecting that the player has pressed the touch panel 22a.

The engine selection section 211e2 accepts an input from the touch panel 22a and selects a kind of engine from among a plurality of kinds of engines which are stored in the engine storage section 213a2. Herein, if a machine card is inserted in the machine-card reader 262, the engine type which is stored in the machine card is chosen. Unless a machine card is inserted in the machine-card reader 262, from among the several (herein, three) types of engines which are stored in the engine storage section 213a2, an engine which is desired by a player is chosen by detecting that the player has pressed the touch panel 22a. Besides, three kinds of engines are set beforehand which can be selected for each vehicle type which is chosen by the vehicle-type selection section 211e1.

The fuel selection section 211f accepts an input from the touch panel 22a and selects a kind of fuel from among a plurality of (e.g., three) kinds of fuels which are stored in the fuel storage section 213b.

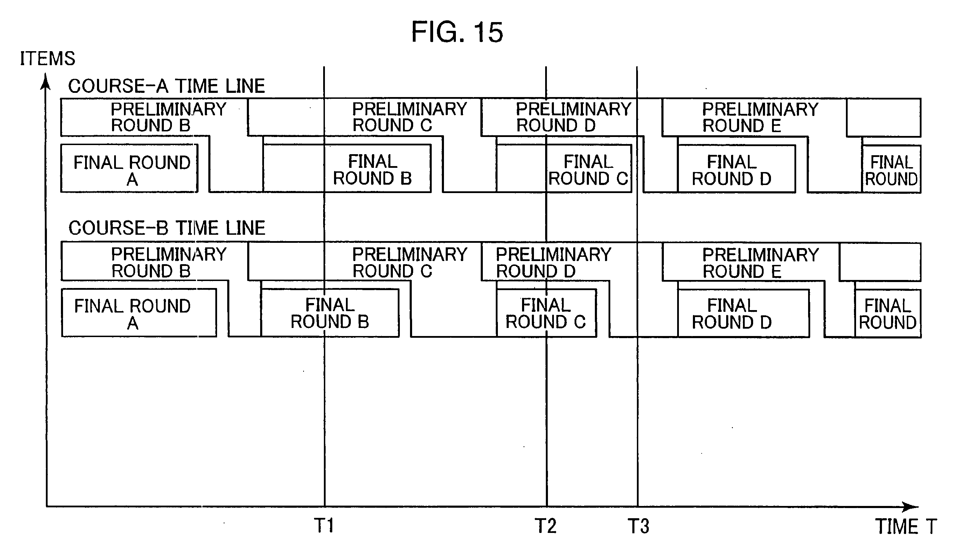

The course selection section 211g accepts an input from the touch panel 22a and selects a course from among a plurality of courses which are stored in the course storage section 213c. Herein, as described using Fig. 15 to Fig. 17 later, the course selection section 211g sets beforehand two kinds of courses which can be chosen according to the time (which is a real time in a built-in clock (not shown)) when a game is executed. By detecting that a player has pressed the touch panel 22a, any one course of the two kinds of courses is chosen. In addition, the course selection section 211g decides whether or not any of these two kinds of courses can be chosen, using a driver's rank which indicates ranking for a driving technique which is stored in a license card.

The game execution section 211h accepts an input from the touch panel 22a, the accelerator 251, the brake 252, the shift lever 253 and the steering wheel 254, and proceeds with the game. Specifically, the game execution section 211h accepts a selection input from the touch panel 22a and license-card information and machine-card information from the license-card reader 261 and the machine-card reader 262. Then, it sets various game conditions. Besides, it accepts an input from the accelerator 251, the brake 252, the shift lever 253 and the steering wheel 254, and sends operation information via the transmission section 211m to the server apparatus 1. Next, it accepts, via the reception section 211n, vehicle-body position information which is calculated by the server apparatus 1. It suitably reads image information from the image storage section 213d and displays it in the monitor 22. Then, it reads sound-and-voice information from the audio storage section 213e and outputs it to the speaker 23, so that a game can be moved ahead.

The cast-money calculation section 211i calculates a cast sum of money which is the amount of a coin that is cast into the coin acceptance section 27. Specifically, the cast-money calculation section 211i accepts a detection result from the multi-coin selector 27a, and identifies the kind (or the amount) of a coin that is cast into the coin acceptance section 27. Thereby, it calculates a cast sum of money. Besides, if several coins are cast into the coin acceptance section 27, the cast-money calculation section 211i calculates and adds the cast sum of money based on the kinds of coins, so that the total cast amount of money can be calculated.

The money decision section 211j decides whether or not the cast money that is calculated by the cast-money calculation section 211i is equal to, or more than, the charged money that is calculated by the charged-money calculation section 211c. If the cast money is equal to, or more than, the charged money, it permits executing the game.

The operation-input acceptance section 211k accepts an input from the touch panel 22a, the accelerator 251, the brake 252, the shift lever 253, the steering wheel 254, the license-card reader 261, the machine-card reader 262 and the multi-coin selector 27a. Then, it transmits the information it has accepted to the server apparatus 1 via the transmission section 211m.

The transmission section 211m transmits, to the server apparatus 1, the operation-input information that is accepted by the operation-input acceptance section 211k. The reception section 211n receives various types of information such as information on a vehicle-body position from the server apparatus 1, and offers it to the game execution section 211h.

The remaining-quantity storage section 212a stores the remaining quantity of fuel which is calculated by the charged-money calculation section 211c.

The vehicle-type storage section 213a1 stores in advance identification information on a plurality of kinds of vehicles. The engine storage section 213a2 stores in advance identification information on a plurality of kinds of engines. The fuel storage section 213b stores in advance identification information and unit-price information on the kind of fuel which is virtually consumed in the vehicle. The course storage section 213c stores in advance route information and lap-number information on a plurality of courses stores which stores route information on a plurality of courses which each have a different distance from a starting point to a goal point. The image storage section 213d stores in advance image information such as an automobile object and a background image. The audio storage section 213e stores in advance a voice that is outputted to the speaker 23.

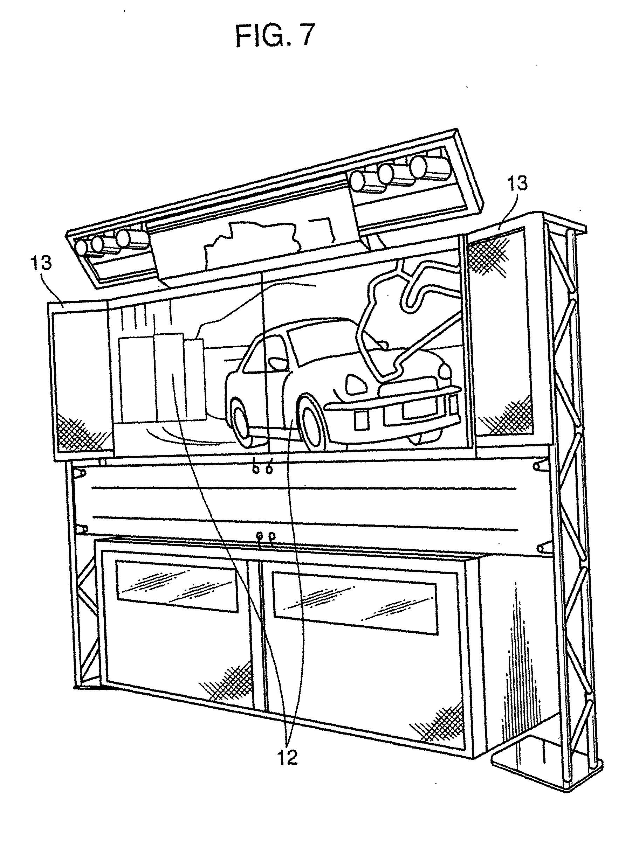

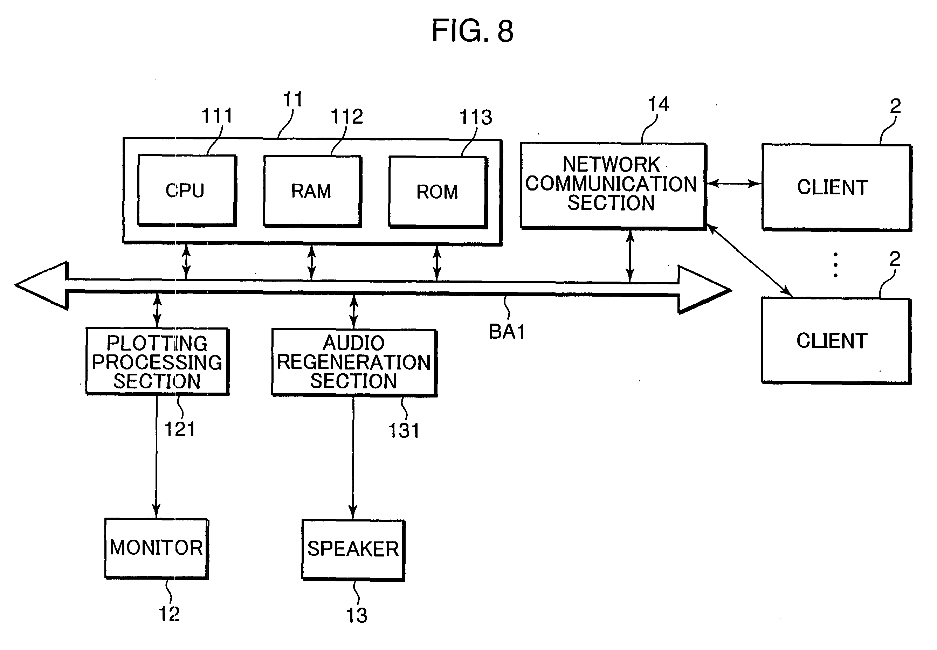

Fig. 7 is a perspective view of an example of the server apparatus 1. The server apparatus 1 includes a monitor 12 which displays an image, and a speaker 13 which outputs a sound and a voice. The server apparatus 1 is provided with a control section 11 (see Fig. 8) which is configured by a microcomputer that outputs a detection signal from each section or a control signal to each section, and the like.

Herein, the monitor 12 is configured by two large 50-inch screen monitors which are laterally arranged. Hence, it can provide a powerful image to a player and a spectator. Besides, the two large 50-inch screen monitors can display a separate image from each other. In addition, the two monitors can display a single image as if only one monitor displayed it (as described later, this function is realized by a game progress control section 111d).

The speaker 13 has a built-in super woofer, so that it can output a sound within a super-low range which cannot be outputted by a main speaker. This allows a person to hear a sound over the entire human-audible range.

Fig. 8 is a block diagram, showing an example of the functional configuration of the server apparatus 1. The control section 11 controls the whole operation of the server apparatus 1. It includes: a information processing section (or CPU) 111; an RAM 112 which stores information temporarily in the middle of a processing; an ROM 113 in which predetermined image information and the like (described later) are stored in advance.

A plotting processing section 121 displays a required image in the monitor 12 according to an image display instruction from the control section 11. It includes a video RAM or the like. An audio regeneration section 131 outputs a predetermined massage, BGM or the like to speaker 13 according to an instruction from the control section 11.

In the ROM 113, there are stored an automobile image, a background image, various screen images, and the like. The automobile image, the a background image, or the like, is formed by a required number of polygons, so that they can be three-dimensionally plotted. Based on a plotting instruction from the CPU 111, the plotting processing section 121 executes a calculation for converting a position in the three-dimensional space into a position in a pseudo three-dimensional space, a light-source calculation processing, or the like. In addition, Based on this calculation result, it executes a processing for writing image data to be plotted in a video RAM, for example, a processing for writing (attaching) texture data in the area of a video RAM which is designated by the polygon.

Among various kinds of data which are stored in the ROM 113 , data which can be stored in an attachable and detachable recording medium may also be read, for example, by a driver, such as a hard disk drive, an optical disk drive, a flexible disk drive, a silicon disk drive and a cassette medium reader. In that case, the recording medium is, for example, a hard disk drive, an optical disk drive, a flexible disk drive, a CD, a DVD, a semiconductor memory, or the like.

A network communication section 14 transmits and receives via a network, to and from the client terminal apparatus 2, various types of event information which are produced while an raving game is in execution.

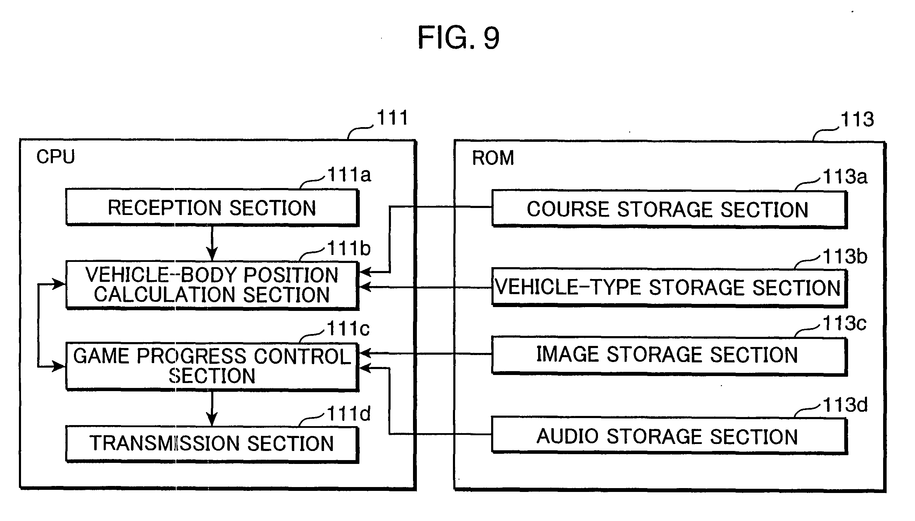

Fig. 9 is a block diagram, showing an example of the functional configuration of the control section 11. The CPU 111 includes: a reception section 111a which receives various kinds of information from each client terminal apparatus 2; a vehicle-body position calculation section 111b which calculates the position of a vehicle body using various kinds of information from the client terminal apparatus 2 that are received by the reception section 111a; a game progress control section 111c which decides whether each automobile has collided in the same game space using the vehicle-body position that are calculated by the vehicle-body position calculation section 111b, as well as takes the synchronism of an image which is displayed in each client terminal apparatus 2; and a transmission section 111d which transmits, to each client terminal apparatus 2, various kinds of information necessary for the progress of the game.

The ROM 113 includes: a course storage section 113a which stores in advance route information on a plurality of courses; a vehicle-type storage section 113b which stores in advance identification information on a plurality of kinds of automobiles; an image storage section 113c which stores in advance image information such as an automobile object and a background image; and an audio storage section 113d which stores in advance a voice that is outputted to the speaker 13.

The reception section 111a receives various types of information such as operation-input information from each client terminal apparatus 2.

The vehicle-body position calculation section 111b calculates the position of a vehicle body, using operation-input information or the like from the client terminal apparatus 2 which is received by the reception section 111a. Specifically, using operation information on the accelerator 251, the brake 252, the shift lever 253 and the steering wheel 254, the vehicle-body position calculation section 111b calculates the position of a vehicle body for each frame (e.g., 1/60 seconds).

The game progress control section 111c decides whether each automobile has collided in the same game space using the vehicle-body position that are calculated by the vehicle-body position calculation section 111b, as well as takes the synchronism of an image which is displayed in each client terminal apparatus 2. Specifically, using the vehicle-body position which are calculated by the vehicle-body position calculation section 111b and vehicle-body measurements information which is stored in the vehicle-type storage section 113b, the game progress control section 111c decides whether each automobile has collided in the same game space. If a collision has taken place, it adds the fact that a collision has taken place to the conditions and instructs the vehicle-body position calculation section 111b to calculate a vehicle-body position again. Besides, the game progress control section 111c transmits the vehicle-body position information on an automobile in the same game space via the transmission section 111d to each client terminal apparatus 2. Thereby, it synchronizes images which are displayed in the client terminal apparatuses 2. Furthermore, the game progress control section 111c determines an image which is displayed in the monitor 12 and a voice which is outputted in the speaker 13. Then, it reads and generates necessary information from the image storage section 113c and the audio storage section 113d.

The transmission section 111d transmits, to each client terminal apparatus 2, the vehicle-body position information on an automobile in the same game space, or the like.

The course storage section 113a stores in advance route information on a plurality of courses and information on the number of laps. The vehicle-type storage section 113b stores in advance identification information and shape information on a plurality of kinds of automobiles. The image storage section 113c stores in advance image information such as an automobile object and a background image. The audio storage section 113d stores in advance a voice which is outputted to the speaker 13.

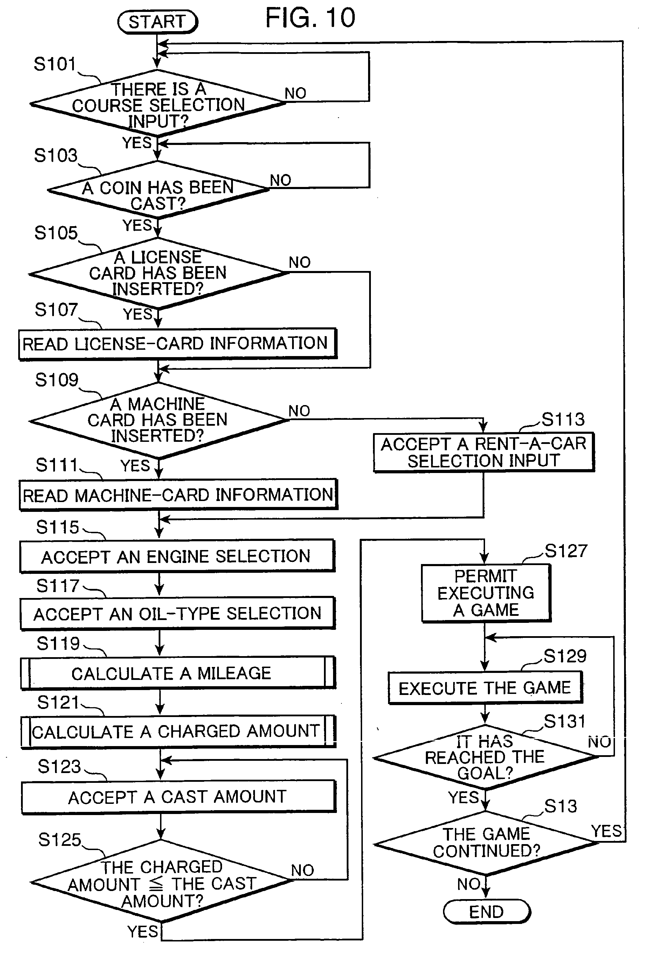

Fig. 10 is a flow chart, showing an example of the operation of the client terminal apparatus 2. The course selection section 211g decides whether or not there has been a course selection input from the touch panel 22a (in a step S101). If there has been no course selection input, the processing comes into a standby state. If there has been a course selection input, the course selection section 211g selects a course and the cast-money calculation section 211i decides whether or not a reference play charge (herein, 200 yen) has been cast (in a step S103). Unless the reference play charge has been cast, it comes into a standby state. If the reference play charge has been cast, the game execution section 211h decides whether or not a license card is inserted in the license-card reader 261 (in a step S105).

If the decision is made that a license card is not inserted, the processing proceeds to a step S109. If the decision is made that a license card is inserted, the game execution section 211h reads the license-card information (in a step S107). In the step S105, if the decision is made that a license card is not inserted and if the processing of the step S107 is completed, the game execution section 211h decides whether or not a machine card is inserted in the machine-card reader 262 (in a step S109).

If the decision is made that a machine card is inserted, the vehicle-type selection section 211e1 reads the machine-card information and chooses a type of an automobile which is stored in the machine card (in a step S111). If the decision is made that a machine card is not inserted, then from among three types of rent-a-cars which are stored in the vehicle-type storage section 213a1, the vehicle-type selection section 211e1 detects a player pressing the touch panel 22a and selects a type of vehicle which is desired by the player (in a step S113).

Then, if a machine card is inserted in the machine-card reader 262, the engine selection section 211e2 selects a kind of engine which is stored in the machine card. Unless a machine card is inserted in the machine-card reader 262, it selects an engine which is set beforehand (in a step S115).

Next, the fuel selection section 211f accepts an input from the touch panel 22a and selects a kind of fuel from among three kinds of fuels which are stored in the fuel storage section 213b (in a step S117). Sequentially, the gas-mileage calculation section 211b calculates the gas mileage of an automobile, using information on a type of vehicle which is selected by the vehicle-type selection section 211e1 and engine information on an engine which is selected by the engine selection section 211e2 (in a step S119). Then, the charged-money calculation section 211c calculates the quantity of fuel which is virtually consumed by dividing the gas mileage that is calculated by the gas-mileage calculation section 211b into the movement distance that is calculated by the distance calculation section 211a and calculates a charged sum of money by multiplying this quantity of fuel by the unit price of fuel which is uniquely determined according to the type of fuel which is chosen by the fuel selection section 211f (in a step S121).

Then, the cast-money calculation section 211i calculates the total cast sum of money (in a step S123), and the money decision section 211j decides whether or not the total cast money is equal to, or more than, the charged money that is calculated by the charged-money calculation section 211c (in a step S125). If the total cast money is less than the charged money, a message to prompt an additional cast of a coin is displayed in the monitor 22, and then, the processing returns to the step S123. If the total cast money is equal to, or more than, the charged money, the money decision section 211j permits executing the game (in a step S127). Next, the game execution section 211h executes the game (in a step S129). Then, it decides whether or not all the automobiles in the game have reached the goal in the same game space (in a step S131). If the decision is made that not all the automobiles have reached the goal, the processing returns to the step S129 and the game continues. If the decision is made that all the automobiles have reached the goal, the game execution section 211h decides whether or not the game should be continued (in a step S133). If the decision is made that the game should not be continued, the processing ends. If the decision is made that the game should be continued, the processing returns to the step S101 and the above described processing is repeated.

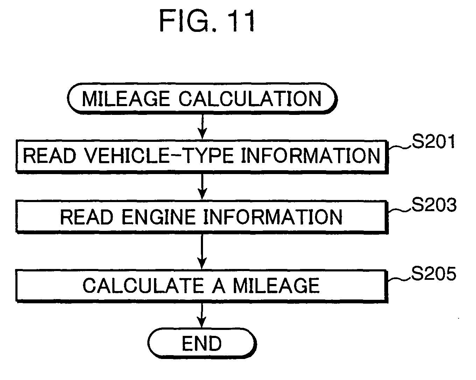

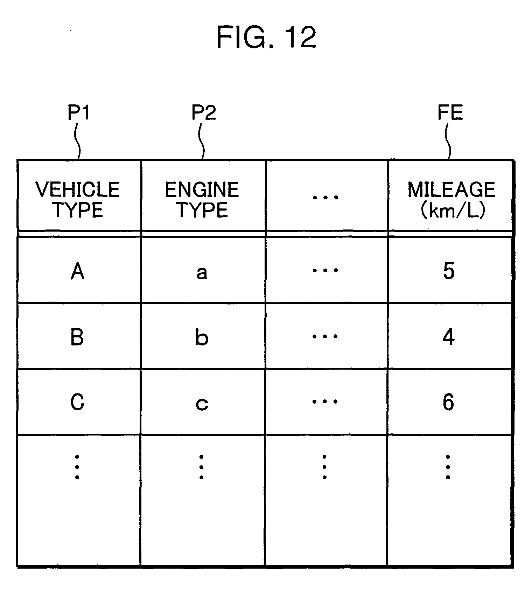

Fig. 11 is a flow chart, specifically showing an example of a gas-mileage calculation in the step S119 of the flow chart shown in Fig. 10. Herein, the following entire processing is executed by the gas-mileage calculation section 211b. First, the vehicle-type information which has been selected by the vehicle-type selection section 211e1 is read out (in a step S201). Then, the engine information on an engine which has been selected by the engine selection section 211e2 is read out (in a step S203). Next, using the vehicle-type information and the engine information, the gas mileage of an automobile is calculated with reference to a table data shown in Fig. 12 (in a step S205).

Fig. 12 is a table, showing an example of the table data which is used for a gas-mileage calculation in the step S205 of the flow chart shown in Fig. 11. In the left-end column, vehicle-type identification information P1 is stored, in the second column P2 from the left, engine identification information P2 is stored, and the right-end column, a gas mileage FE is stored. Using this table, the gas-mileage calculation section 211b calculates the gas mileage FE. For example, the vehicle-type identification information P1 is "B" and the engine identification information P2 is "b", the gas mileage FE is "4 km/L".

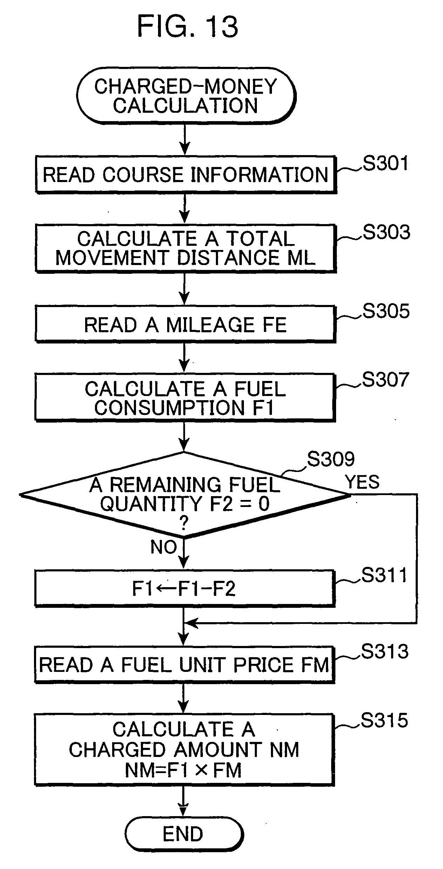

Fig. 13 is a flow chart, specifically showing an example of the charged-money calculation in the step S121 of the flow chart shown in Fig. 10. Herein, all the following processing is executed by the charged-money calculation section 211c, unless any specific comment is especially given. First, the course information on a course which has been selected by the course selection section 211g is read from the course storage section 213c (in a step S301). Next, the distance calculation section 211a calculates a total distance ML at which the automobile has moves along the course in the game space which has been chosen by the course selection section 211g (in a step S303). Then, the gas-mileage calculation section 211b calculates the gas mileage FE of an automobile (in a step S305).

Sequentially, by dividing the total movement distance ML by the gas mileage FE, a fuel consumption F1 which is the quantity of fuel which is virtually consumed is calculated (in a step S307). Then, a remaining fuel quantity F2 is read from the remaining-quantity storage section 212a, and a decision is made whether or not the remaining fuel quantity F2 is "0" (in a step S309). If the decision is made that the remaining fuel quantity F2 is "0", the processing proceeds to a step S313. If the decision is made that the remaining fuel quantity F2 is not "0", the remaining fuel quantity F2 is subtracted from the fuel consumption F1. Then, its result is substituted for the fuel consumption F1 (in a step S311).

In the step S309, if the decision is made that the remaining fuel quantity F2 is "0" and if the processing of the step S311 is completed, a fuel unit price FM which corresponds to the type of fuel that has been chosen by the fuel selection section 211f is read from the fuel storage section 213b (in a step S313). Then, by multiplying the fuel consumption F1 by the fuel unit price FM, a charged money NM is calculated (in a step S315).

Hence, the charged money NM is calculated based on the fuel consumption F1 which is virtually consumed and a charge which is set in this way satisfies a player. Besides, the charged money NM is calculated using the remaining fuel quantity F2 at the end of the preceding game. This further convinces a player of the setting of a charge.

Furthermore, the gas mileage FE is calculated based on the kind (or vehicle type) of an automobile, and thus, the gas mileage FE which is proper for an automobile can be calculated. Moreover, based on the type of an engine, the gas mileage FE is calculated. This makes it possible to calculate the gas mileage FE which is more appropriate for an automobile. In addition, the kind of an engine which can be chosen according to the type of an automobile is preset, thereby improving the game's reality.

Furthermore, the charged money NM is calculated based on the kind of fuel, and thus, the setting of a charge can further satisfy a player. Besides, a course is chosen from among several courses, and thus, a player can enjoy choosing a course in a game. In addition to this, the total movement distance ML along the route on the chosen course is calculated, and based on the total movement distance ML, money is charged. This setting of a charge satisfies a player.

In addition, in the course storage section 213c, there is stored route information on a plurality of courses which each have a different distance from a starting point to a goal point. Hence, a course can be chosen from among the plurality of courses which each have a different distance from a starting point to a goal point. This diversifies selectable courses, thereby making the game more tasteful. Besides, if the decision is made that the cast money is equal to, or more than, the charged money, a permission is given to execute the game. This is more convenient for a player.

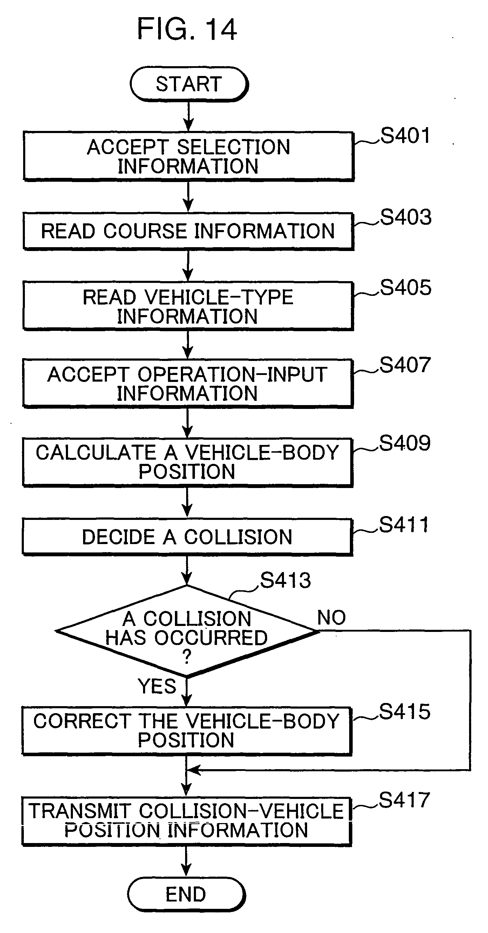

Fig. 14 is a flow chart, showing an example of the operation of the server apparatus 1. First, the reception section 111a receives various kinds of selection information (course selection information, vehicle-type selection information, engine selection information and fuel selection information) from each client terminal apparatus 2 (in a step S401). Then, the vehicle-body position calculation section 111b reads, from the course storage section 113a, the course information which corresponds to the course selection information (in a step S403). Next, the vehicle-body position calculation section 111b reads, from the vehicle-type storage section 113b, the automobile shape information which corresponds to the vehicle-type selection information (in a step S405). Sequentially, the reception section 111a receives various kinds of operation information (operation information on the accelerator 251, the brake 252, the shift lever 253 and the steering wheel 254) from each client terminal apparatus 2 (in a step S407).

Then, the vehicle-body position calculation section 111b calculates the vehicle-body position of all the automobiles in the same game space (in a step S409). Next, the game progress control section 111c decides whether each automobile has collided (in a step S411). If a collision has taken place, the vehicle-body position calculation section 111b makes a calculation to rectify the vehicle-body position of the automobiles which have had the collision (in a step S415). If a collision has not taken place and if the processing of the step S415 is completed, the transmission section 111d transmits, to the client terminal apparatus 2, collision information (i.e., information which indicates whether or not a collision has taken place) and the vehicle-body position on an automobile in the same game space (in a step S417). Then, the processing is completed.

In this way, the server apparatus 1 unifies and executes the calculation for the vehicle-body position of automobiles in the same game space. Therefore, an image which is displayed in the monitor 22 of each client terminal apparatus 2 which transmits operation information on automobiles in the same game space and a voice which is outputted from the speaker 23, can be synchronized. This allows a player not to feel queer in a game.

Fig. 15 is a representation, showing an example of a racing game. The horizontal axis is a time T and a vertical axis is an item. In this figure, races are simultaneously held at two upper and lower stages (i.e., a course A and a course B). For example, at a time T1, a preliminary round C and a final round B are virtually executed at the same time on the course A. On the course B, a preliminary round C and a final round B are virtually executed at the same time. A player can, for example, if starting at the time T1, choose a preliminary round C of the course B and execute a final round C of the course B (while executing a final round C of the course B at a time T2). After executing the final round C of the course B, at a time T3, the player can take part in a preliminary round D of the course A.

In this way, virtually, different races are simultaneously held on two courses. Thus, a player can freely choose the race the player wants to participate in. This makes the game more interesting.

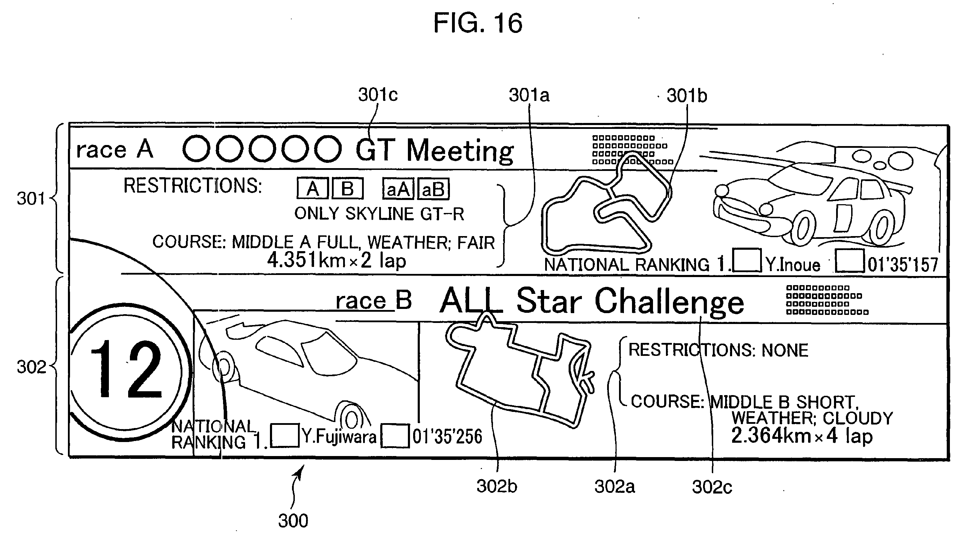

Fig. 16 is a representation, showing an example of a held race image which is displayed in the monitor 12 of the server apparatus 1 to notify players and spectators that a race is to be held. In a held race image 300, on the upper side, a first race display section 301 is displayed which displays information on a race that is held on the course A. On the lower side, a second race display section 302 is displayed which displays information on a race that is held on the course B. In each of the first race display section 301 and the second race display section 302, there are displayed: race-name display sections 301c and 302c which display the name of a race that is held; route display sections 301b and 302b which display the route image of a course; and a condition display section 301a which displays the condition of a course. A player and a spectator refer to the held race image 300, so that they can recognize the outline of a race to be held from now. This is more convenient for the player and the spectator.

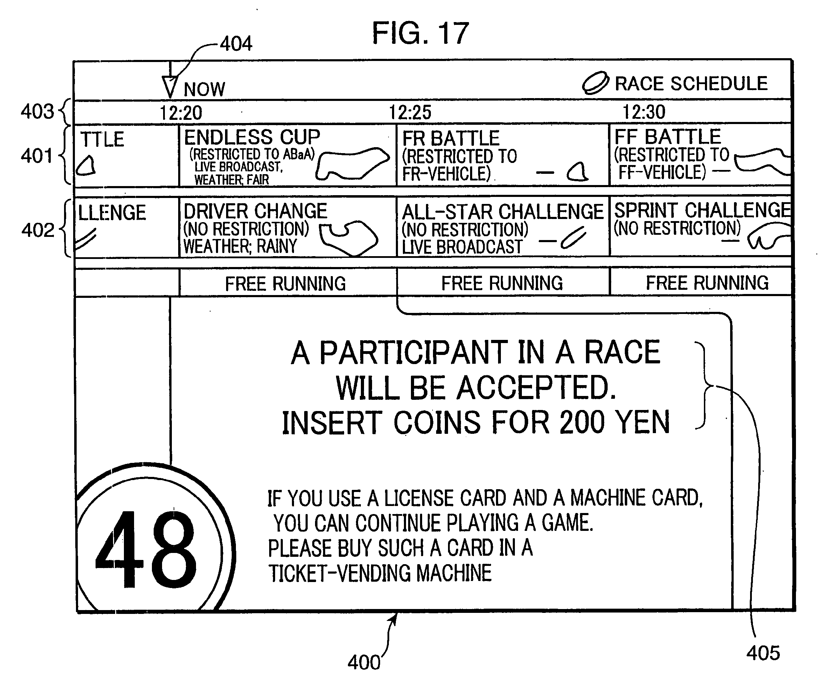

Fig. 17 is a representation, showing an example of a course selection image which is displayed in the monitor 22 of the client terminal apparatus 2 in the step S101 of the flow chart shown in Fig. 10. In a course selection image 400, there are displayed in order from above: a time display section 403 which indicates the time; a first race display section 401 is displayed which displays information on a race that is held on the course A; a second race display section 402 is displayed which displays information on a race that is held on the course B; and a guidance display section 405 which indicates guidance for a player. In the time display section 403, the passing time is displayed from the left side to the right side. In the first race display section 401 and the second race display section 402, a race is displayed to be held at the time which is displayed in the time display section 403. Herein, an arrow 404 which indicates a point of the time display section 403 represents the present time. Besides, each race which is displayed in the first race display section 401 and the second race display section 402 can be chosen. Therefore, a player can choose a race by pressing the position of the race which the player wants to take part in. In addition, in the guidance display section 405, "A participant in a race will be accepted. Insert coins for 200 yen." is displayed which indicates that a reference charge for a game is 200 yen. In the course selection image 400, a player can become aware of a schedule on which an upcoming race is to be held and can also choose a course.

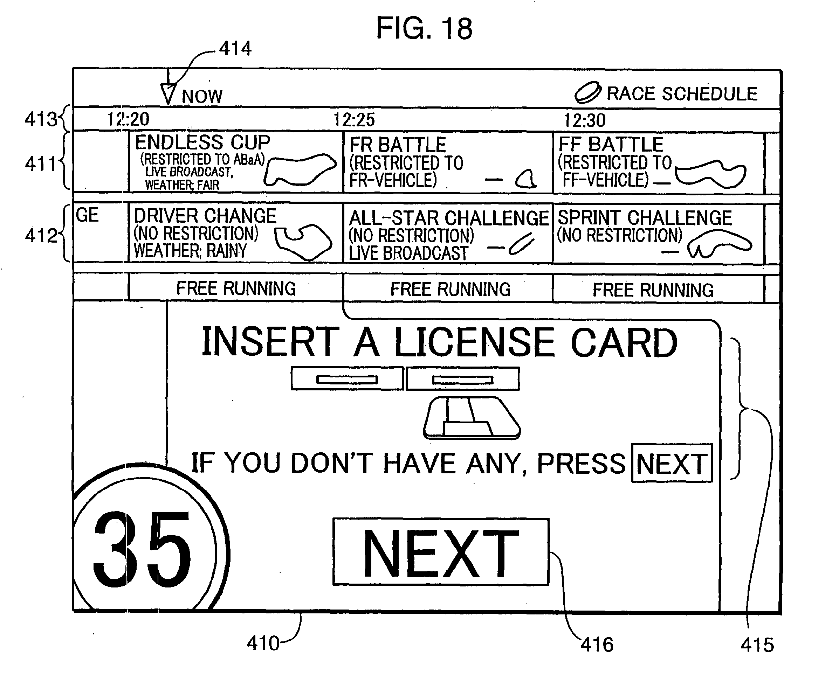

Fig. 18 is a representation, showing an example of a license-card insertion instruction image which is displayed in the monitor 22 of the client terminal apparatus 2 in the step S105 of the flow chart shown in Fig. 10. In a license-card insertion instruction image 410, there are displayed in order from above: a time display section 413 which indicates the time; a first race display section 411 is displayed which displays information on a race that is held on the course A; a second race display section 412 is displayed which displays information on a race that is held on the course B; and a guidance display section 415 which indicates guidance for a player. Herein, an arrow 454 which indicates a point of the time display section 413 represents the present time. In the guidance display section 405, "Insert a license card. If you don't have any, press NEXT." is displayed, and an illustration which shows the insertion position of a license card is also displayed. In addition, a NEXT button 416 is displayed on the lower side of the guidance display section 405. In the display of the guidance display section 405, a player can become aware that the insertion of a license card is prompted and can also recognize that if not having any license card, the NEXT button 416 should be pressed down.

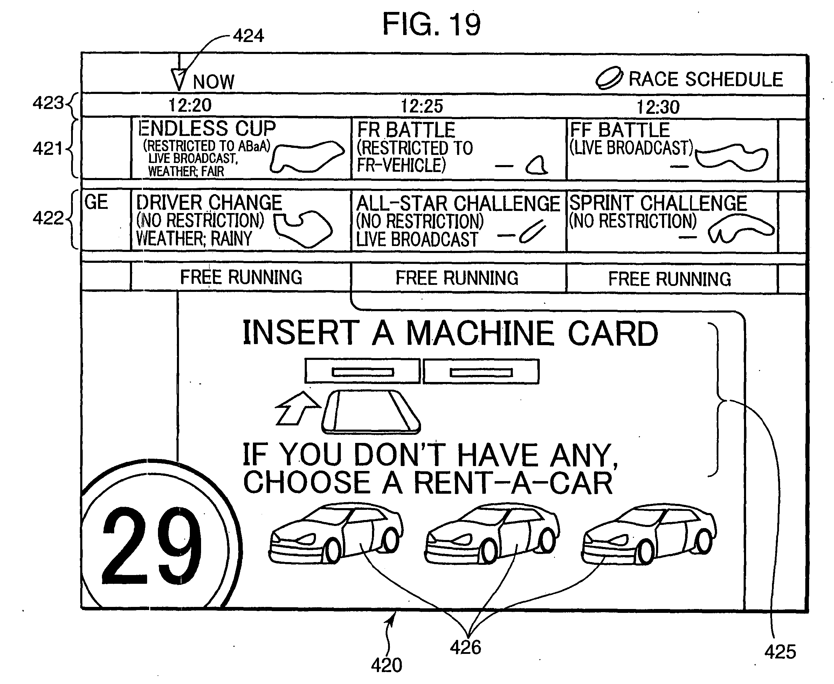

Fig. 19 is a representation, showing an example of a machine-card insertion instruction image which is displayed in the monitor 22 of the client terminal apparatus 2 in the step S109 of the flow chart shown in Fig. 10. In a machine-card insertion instruction image 420, there are displayed in order from above: a time display section 423 which indicates the time; a first race display section 421 is displayed which displays information on a race that is held on the course A; a second race display section 422 is displayed which displays information on a race that is held on the course B; and a guidance display section 425 which indicates guidance for a player. In the guidance display section 425, "Insert a machine card. If you don't have any, choose a rent-a-car." is displayed, and an illustration which shows the insertion position of a machine card is also displayed. In addition, a rent-a-car display section 426 is displayed on the lower side of the guidance display section 415. In the rent-a-car display section 426, the illustrations of three types of rent-a-cars are displayed so that a choice can be made. In the display of the guidance display section 405, a player can become aware that the insertion of a machine card is prompted and can also recognize that if not having any machine card, a rent-a-car should be chosen by pressing any of the illustrations of the rent-a-cars which are displayed in the rent-a-car display section 426.

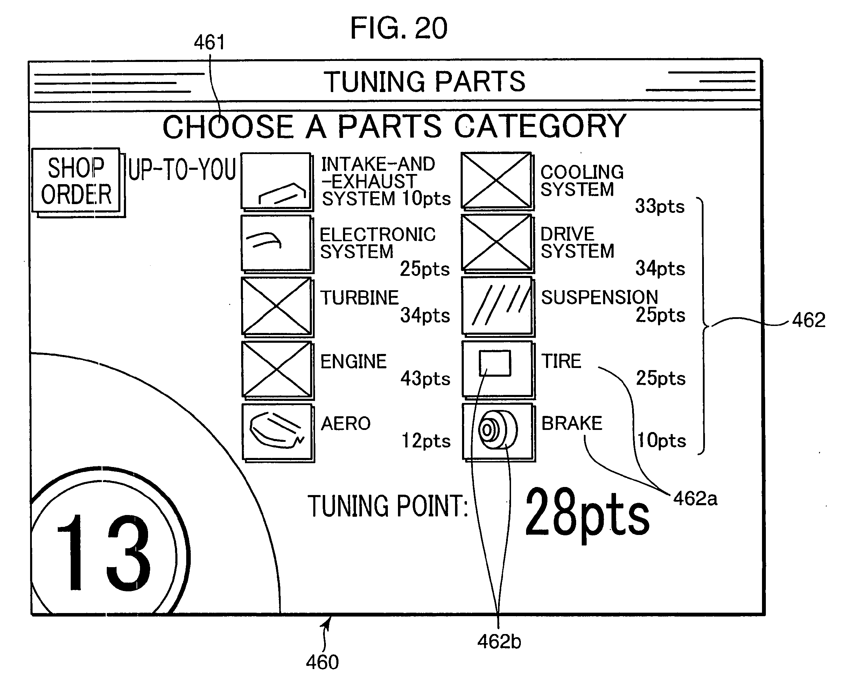

Fig. 20 is a representation, showing an example of a parts selection image which is displayed in the monitor 22 of the client terminal apparatus 2 in the step S115 of the flow chart shown in Fig. 10. Herein, in the flow chart shown in Fig. 10, a case has been described in which only an engine can be chosen among the parts which configure an automobile. However, in the form where parts except an engine can also be chosen, first, the choice of parts whose types are chosen is made using a parts selection image 460. At the upper part of the parts selection image 460, a guidance display section 461 is displayed which indicates guidance for a player. At substantially the middle part of this image, a category display section 462 is displayed which indicates the category of parts whose types are chosen. In the guidance display section 461, the guidance of "Choose a parts category. " is displayed. In the category display section 462, a category name 462 such as an intake-and-exhaust system and an electronic system, and a category selection button 462b which is pressed to choose such a category are displayed. A player can choose the category of a part by pressing the category selection button 462b of the category display section 462. This is more convenient for a player.

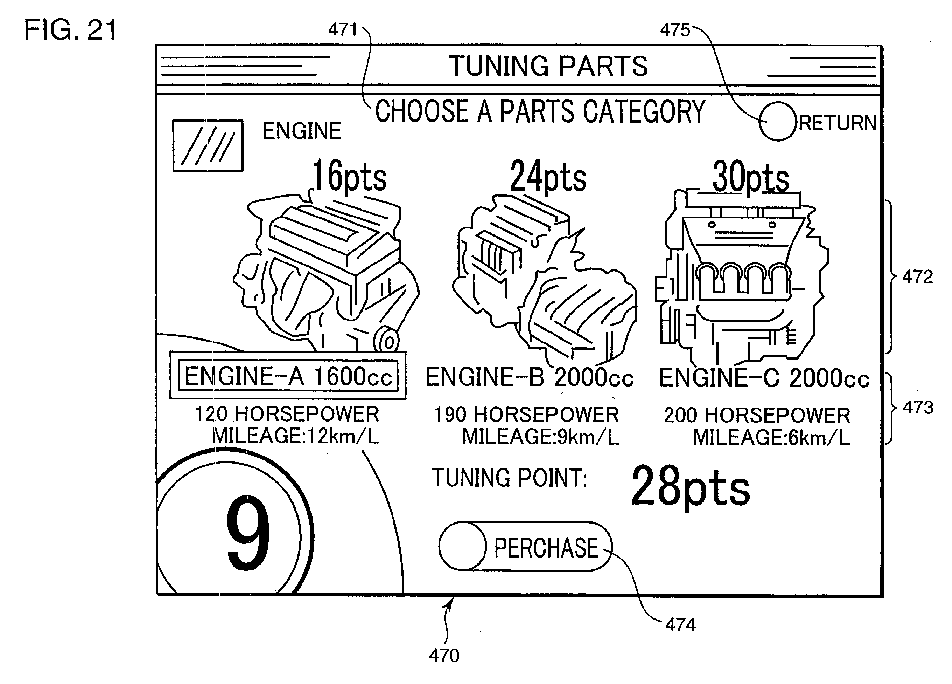

Fig. 21 is a representation, showing an example of an engine selection image which is displayed in the monitor 22 of the client terminal apparatus 2 in the step S115 of the flow chart shown in Fig. 10. At the upper part of an engine selection image 470, a guidance display section 471 is displayed which indicates guidance for a player. At substantially the middle part of this image, an engine external-appearance display section 472 is displayed which indicates an illustration of the external appearance of an engine. Below the engine external-appearance display section 472, an engine specification display section 473 which indicates the main specifications of each engine is displayed. At the upper-right part of the image, a return button 475 for returning to the preceding image is displayed. At the image's lower-end part, a purchase button 474 is displayed which is pressed down to buy the engine which is chosen in the engine external-appearance display section 472.

In the guidance display section 471, the guidance of "Choose a part." is displayed. In the engine external-appearance display section 472, external-appearance illustrations of three types of engines are displayed as selectable buttons. In the engine specification display section 473, specifications are displayed such as the name of an engine, a displacement, a horsepower and a gas mileage. A player refers to the main specifications of an engine which are displayed in the engine specification display section 473 and chooses the engine which the player wants to buy. Then, the player presses the corresponding engine external-appearance illustration of the engine external-appearance display section 472 and presses the purchase button 474, so that the engine can be chosen. Hence, the engine can be chosen by confirming the engine's main specifications, and thus, a player can execute such an operation more easily.

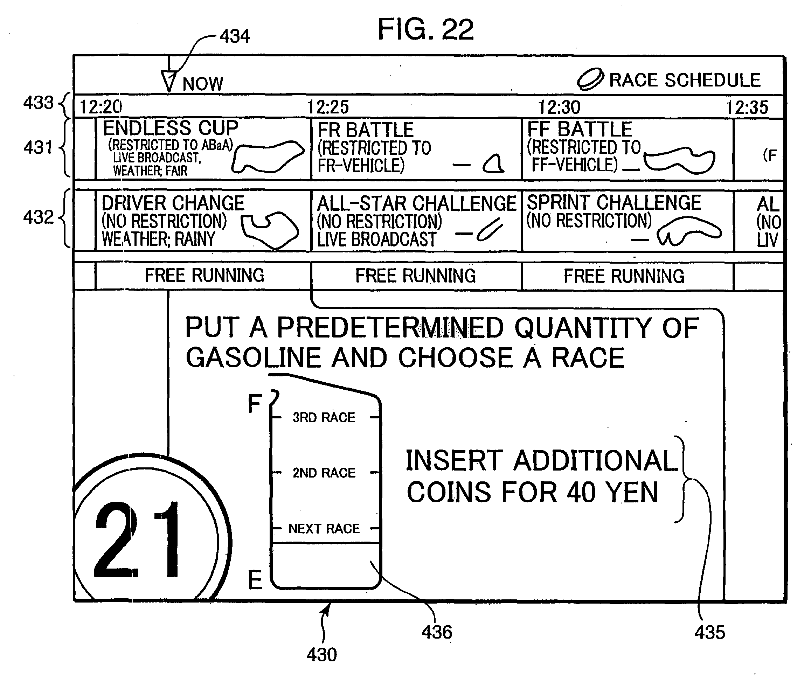

Fig. 22 is a representation, showing an example of a coin-addition request image which is displayed in the monitor 22 of the client terminal apparatus 2 in the step S123 of the flow chart shown in Fig. 10. In a coin-addition request image 430, there are displayed in order from above: a time display section 433 which indicates the time; a first race display section 431 is displayed which displays information on a race that is held on the course A; a second race display section 432 is displayed which displays information on a race that is held on the course B; a guidance display section 435 which indicates guidance for a player; and a remaining fuel-quantity display section 436 which indicates a remaining fuel quantity at present. In the guidance display section 435, "Insert additional coins for 40 yen." is displayed, and in the remaining fuel-quantity display section 436, there is displayed an illustration which imitates the sectional view of a gasoline tank and indicates that there is not enough fuel to participate in the next race. In this way, a remaining fuel quantity is displayed in the remaining fuel-quantity display section 436, and thus, a player can become aware from the remaining fuel quantity that the necessary fuel for starting the game is in short supply. This is more convenient for the player.

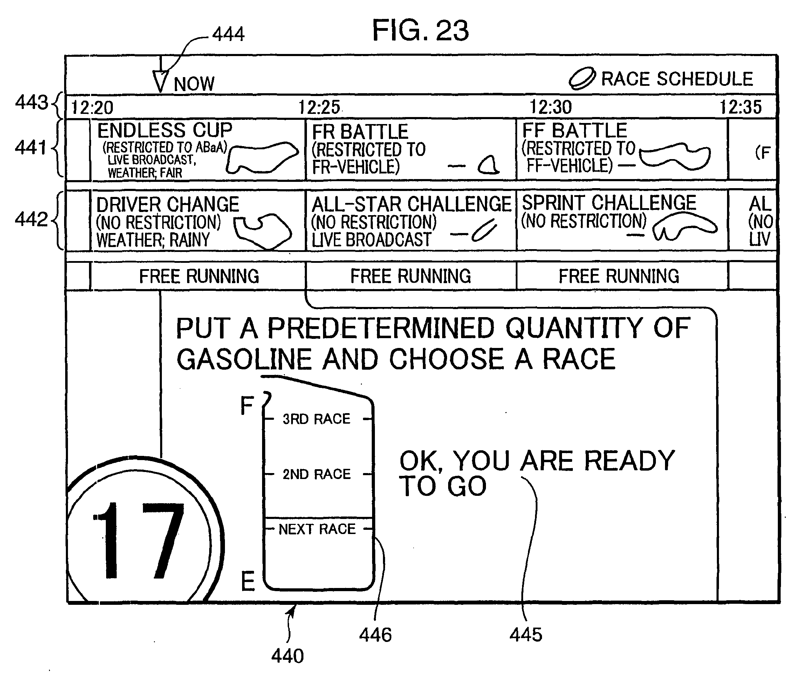

Fig. 23 is a representation, showing an example of a game-execution permission image which is displayed in the monitor 22 of the client terminal apparatus 2 in the step S127 of the flow chart shown in Fig. 10. In a game-execution permission image 440, there are displayed in order from above: a time display section 443 which indicates the time; a first race display section 441 is displayed which displays information on a race that is held on the course A; a second race display section 442 is displayed which displays information on a race that is held on the course B; a guidance display section 445 which indicates guidance for a player; and a remaining fuel-quantity display section 446 which indicates a remaining fuel quantity at present. In the guidance display section 435, "OK, you are ready to go." is displayed, and in the remaining fuel-quantity display section 446, there is displayed an illustration which imitates the sectional view of a gasoline tank and indicates that there is enough fuel to participate in the next race. In this way, a remaining fuel quantity is displayed in the remaining fuel-quantity display section 446, and thus, a player can recognize from the remaining fuel quantity that the necessary fuel for starting the game is sufficient. This is more convenient for the player.

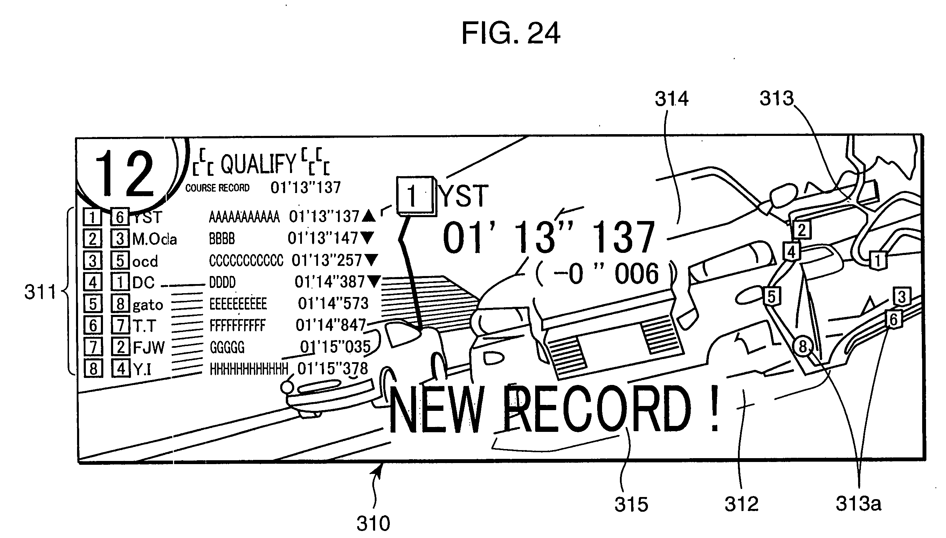

Fig. 24 is a representation, showing an example of a game image which is displayed in the monitor 12 of the server apparatus 1 while a game is in execution. In a game image 310, there are displayed: on the image's left side, a ranking display section 311 which indicates ranking; at the image's substantially middle part, an automobile display section 314 which illustrates the external appearance of an automobile; on the image's right-hand side, a course display section 313 which represents the route of a course; and at the image's lower part, a message display section 315 which gives a message. In the course display section 313, a position indication mark 313a which indicates the position of an automobile which is taking part in this race. Hence, in the course display section 313, displaying the position indication mark 313a which indicates the position of an automobile which is taking part in this race makes it easy to grasp the ranking and position of an automobile. This is more convenient for a player.

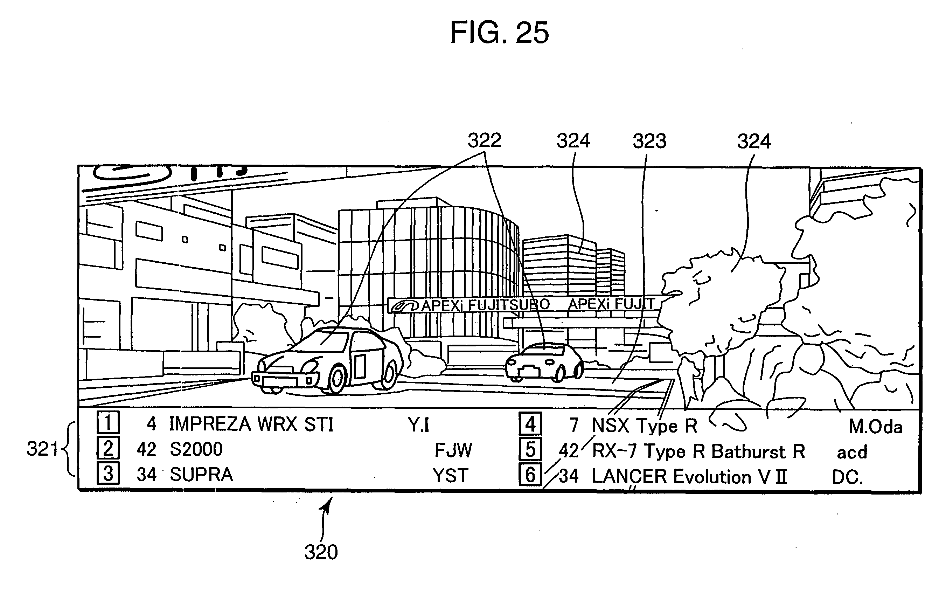

Fig. 25 is a representation, showing an example of a goal image which is displayed in the monitor 12 of the server apparatus 1 while the game is in execution. In a goal image 320, there are displayed: on the image's lower side, a ranking display section 321 which indicates ranking; at the image's substantially middle part, an automobile display section 322 which illustrates the external appearance of an automobile; a course-image display section 323 which represents the view of a course on which an automobile runs virtually; and a background-image display section 324 which gives a background image.

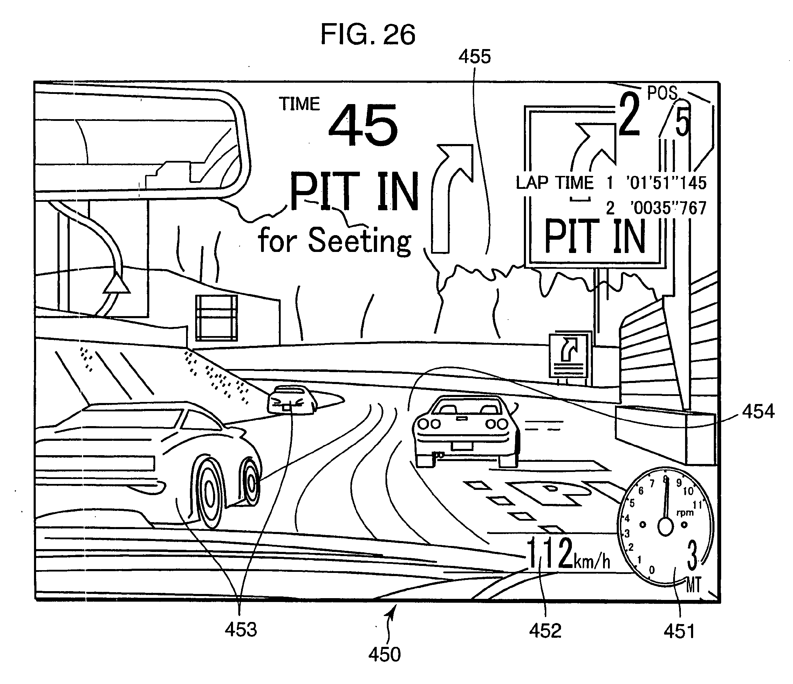

Fig. 26 is a representation, showing an example of a game image which is displayed in the monitor 22 of the client terminal apparatus 2 while the game is in execution. In a game image 450, there are displayed: at the image's lower-right part, a tachometer display section 451 which displays a tachometer; on the left side of the tachometer display section 451, a speed display section 452 which displays a speed; an another-vehicle display section 453 which displays an image that illustrates the external appearance of another vehicle; a course-image display section 454 which displays the image of a course; and a background-image display section 455 which displays a background image. In this way, in the game image 450, except for the game image, only the tachometer display section 451 and the speed display section 452 are displayed. Hence, there is almost nothing to interrupt the view of a player, thus making it easier for the player to operate it.

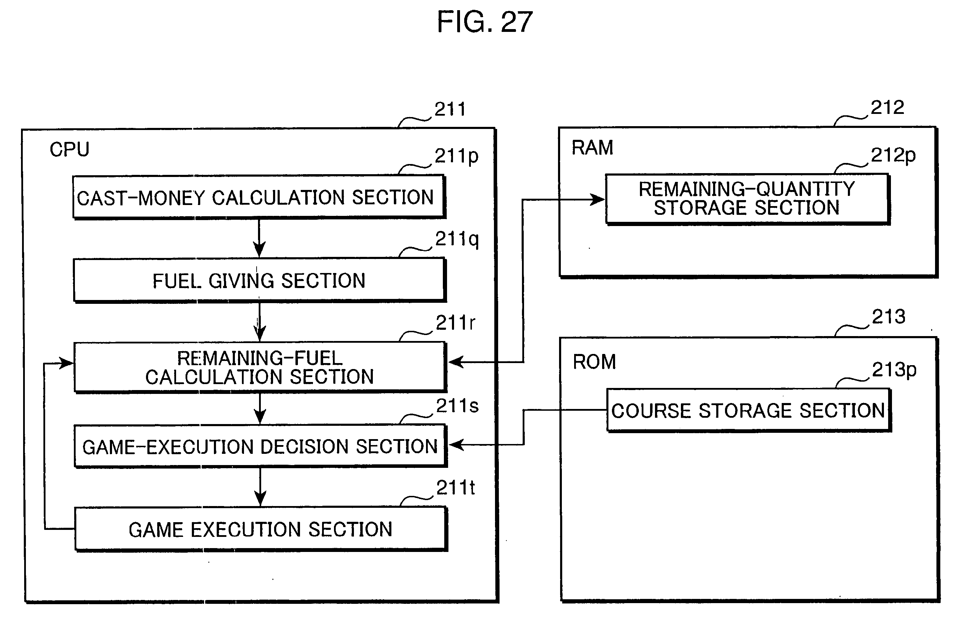

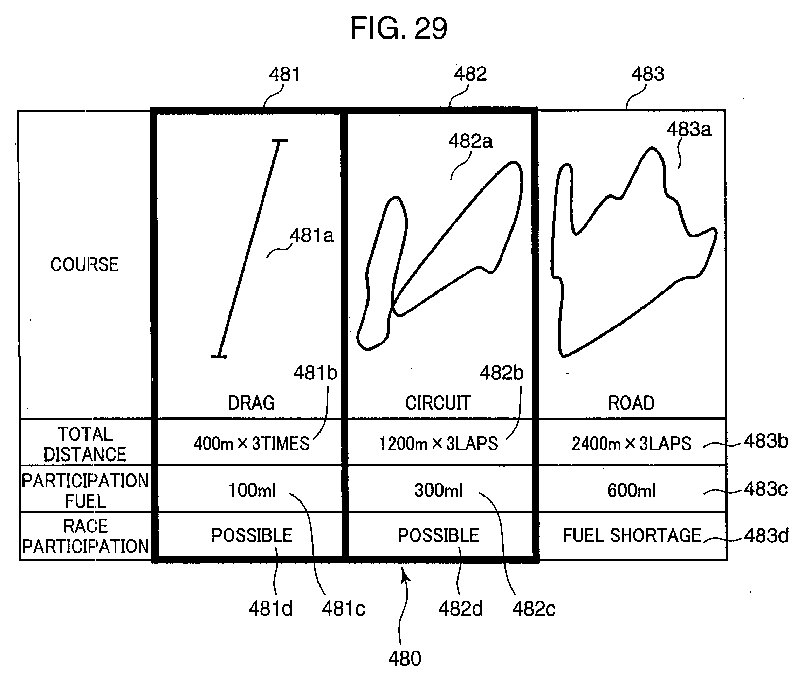

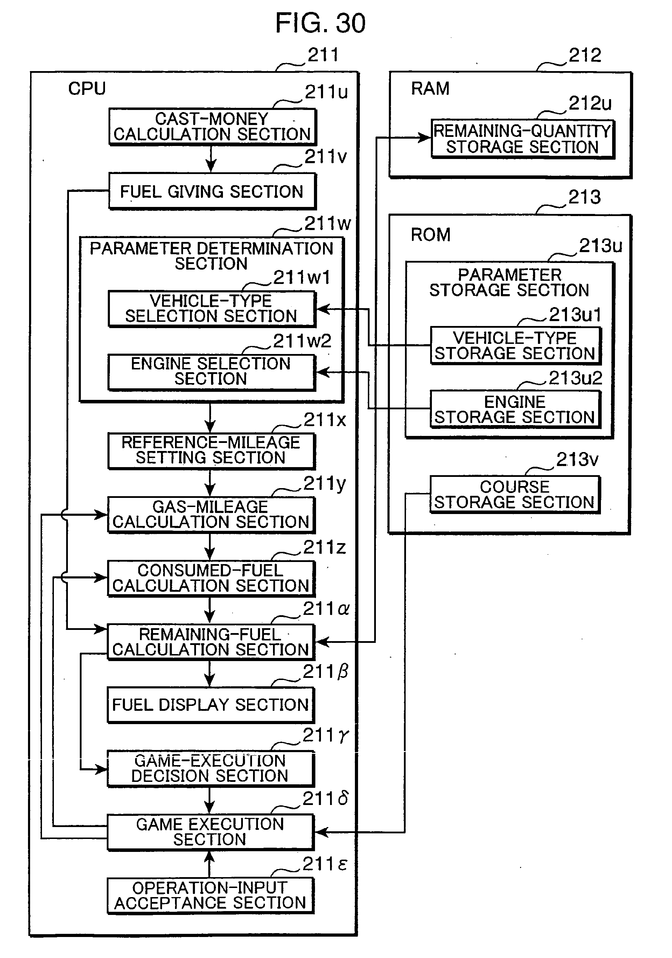

Herein, the present invention can take up the following form.
(A) In this embodiment, a case is described in which the game money-charging program is applied to a game system which is configured by the server apparatus 1 and the plurality of client terminal apparatuses 2. However, it may also be used for a stand-alone video game apparatus.
(B) In this embodiment, a case is described in which the game money-charging program is applied to the client terminal apparatus 2 (i.e., the game money-charging program is stored in the ROM 213 as a recording medium which is provided in the client terminal apparatus 2). However, a part of the game money-charging program or its whole part may also be used for the server apparatus 1 (i.e., the game money-charging program is stored in the ROM 113 or the like as a recording medium which is provided in the server apparatus 1).
(C) In this embodiment, a case is described in which the game is a car racing game. However, it may also be a game in which another vehicle is moved in a game space. For example, it may also be the form of a battle game in which a fighter or helicopter for combat is used.
(D) In this embodiment, as an aspect, a case is described in which a charged amount of money is calculated based on a fuel consumption. However, another form may also be used in which a distance by which a vehicle can move per unit charged money in a game space is calculated, the vehicle's total movement distance from the game's start in the game space is calculated, and a charged sum of money is calculated using these total movement distance and movable distance. In this case, there is no need to calculate a fuel consumption, and thus, a charged amount can be easily calculated.
(E) In this embodiment, a case is described in which the vehicle is an automobile. However, another kind of vehicle may also be used (e.g., an airplane and a motorbike).
(F) In this embodiment, a case is described in which the parameter which determines the gas mileage of an automobile is a vehicle's type and an engine's type. However, another parameter may also be used (e.g., a muffler's type, a turbojet's type and a rear spoiler's type).
(G) In this embodiment, a case is described in which the quantity of consumed fuel is calculated when a game starts and ends. However, it may also be calculated in real time simultaneously with the game as it proceeds. In this case, the quantity of consumed fuel can be calculated one after another, for example, according to an operation state of an accelerator. A fuel consumption can be more precisely calculated.
   This accelerator operation state is, for example, the depth up to which a player steps on an accelerator, the depth up to which the player steps on a brake, the position of a gearshift, or the like. In sum, using a parameter such as an accelerator stepping depth, a brake stepping depth and a gearshift position, the quantity of consumed fuel may also be calculated in real time.
(H) In this embodiment, a case is described in which a charged amount of money is calculated using an automobile's total movement distance on a course. However, a charged amount of money may also be based on the difficulty of a course.
   Furthermore, a gas mileage may also be calculated based on the condition of a course (such as a frictional coefficient between the surface of a course and a tire, a road-surface condition such as the inclination of a road surface and the unevenness of a road surface, wind velocity and the wind direction). Specifically, a calculation is made for a frictional coefficient between the surface of a course and a tire, a road-surface condition such as the inclination of a road surface and the unevenness of a road surface, wind velocity and the wind direction. Then, using them, a gas mileage may also be calculated.
(I) In this embodiment, a case is described in which the course is a circuit course. However, another form may also be used in which it is not a circuit course, but a course whose starting point, goal point and route are predetermined. For example, it may also be a simulated rally race. Besides, it may also be a simple drive game in which a starting point, a goal point and a route are not set. In addition, it may also be a game in which a predetermined quantity of fuel is virtually given a player in advance and the player competes for the length of a running distance using this quantity of fuel.
(J) In this embodiment, a player cannot take part in a race if an inserted sum of money is less than a charged amount. However, another form may also be used in which even if an inserted sum of money is less than a charged amount, a player can participate in a race. For example, if a player chooses a one-hour sustenance race, the player can take part in the race as long as there is a little fuel. Then, even if the player's vehicle has run out of the fuel halfway, it can run by casting a charge which is uniquely related to the quantity of fuel. Or, another method may also be used in which a required charged amount of money is not presented first, a player casts in advance a charge which corresponds to the quantity of gasoline that is estimated to be consumed before the player participates, and from this cast money, a charged amount of money which is calculated based on a distance by which a vehicle can move in a game space per unit charged money and a unit movement distance, is paid one by one.
(K) In this embodiment, a case is described in which a charged sum of money is calculated using a distance by which an automobile moves. However, another form may also be used in which a charged amount is calculated according to a course on which an automobile runs (an example of the embodiment which corresponds to claims 17 to 19). Hereinafter, a specific example will be described using Figs. 27 to 29.
   Fig. 27 is a block diagram, showing an example of the functional configuration of the control section 21 of the client terminal apparatus 2. The CPU 211 includes: a cast-money calculation section 211p (which corresponds to the cast-money calculating means) which calculates a cast sum of money which is the amount of a coin that is cast into the coin acceptance section 27; a fuel giving section 211q (which corresponds to the fuel giving means) which gives the player the quantity of virtual fuel which corresponds to the cast money that is calculated by the cast-money calculation section 211p; a remaining-fuel calculation section 211r (which corresponds to the remaining-fuel calculating means) which reads, from a course storage section 213p (described later), a fuel consumption in the course where the automobile ran in the preceding game, subtracts the fuel consumption from the quantity of fuel which is given by the fuel giving section 211q, and calculates the remaining quantity of fuel when the preceding game ends; a game-execution decision section 211s (which corresponds to the game-execution deciding means) which decides whether or not the game can be executed using a course, according to whether or not the quantity of fuel which is given by the fuel giving section 211q for each of several courses that are stored in the course storage section 213p (described later) is equal to, or more than, the fuel consumption which is stored in the course storage section 213p (described later); and a game execution section 211t (which corresponds to the game executing means) which accepts an input from the touch panel 22a, the accelerator 251, the brake 252, the shift lever 253 and the steering wheel 254 and proceeds with the game.
   The RAM 212 includes a remaining-quantity storage section 212p which stores the remaining quantity of fuel. The ROM 213 includes a course storage section 213p (which corresponds to the course storing means) which stores in advance a fuel consumption that is the quantity of fuel which an automobile virtually consumes when the automobile virtually runs along a course, so that the fuel consumption corresponds to each of a plurality of courses.
   The cast-money calculation section 211p calculates a cast sum of money which is the amount of a coin that is cast into the coin acceptance section 27. Specifically, the cast-money calculation section 211p accepts a detection result which is obtained by using a difference in the size or weight of a coin or the like from the multi-coin selector 27a, and identifies the kind (or the amount) of a coin that is cast into the coin acceptance section 27. Thereby, it calculates a cast sum of money. Besides, if several coins are cast into the coin acceptance section 27, the cast-money calculation section 211p calculates and adds the cast sum of money based on the kinds of coins, so that the accumulative cast amount of money can be calculated.
   The fuel giving section 211q gives the player the quantity of virtual fuel which corresponds to the cast money that is calculated by the cast-money calculation section 211p. Herein, for example, if a cast sum of money is 100 yen, fuel (or gasoline) is given by a quantity of 500 ml, and fuel is given in proportion to a cast amount of money.
   The remaining-fuel calculation section 211r adds the quantity of fuel which is given by the fuel giving section 211q to the remaining fuel quantity, every time a coin is cast into the coin acceptance section 27. Then, every time a game ends, it reads, from the course storage section 213p, a fuel consumption in the course where the automobile ran in the game and subtracts it, and calculates the remaining quantity of fuel at that time. Every time the remaining quantity of fuel changes, the remaining quantity of fuel is updated and stored in the remaining-quantity storage section 212p.
   The game-execution decision section 211s decides whether or not the game can be executed using a course, according to whether or not the quantity of fuel which is given by the fuel giving section 211q for each of several courses that are stored in the course storage section 213p is equal to, or more than, the fuel consumption which is stored in the course storage section 213p (see Fig. 29). Besides, the game-execution decision section 211s accepts an input from the touch panel 22a, and if an instruction is given to execute a game in which a vehicle runs on a course which the decision is made that the game can be executed on, allows the game execution section 211t to execute the game in which a vehicle runs on that course.
   The game execution section 211t accepts an input from the touch panel 22a, the accelerator 251, the brake 252, the shift lever 253 and the steering wheel 254 and proceeds with the game. Specifically, the game execution section 211t accepts an input from the touch panel 22a, the accelerator 251, the brake 252, the shift lever 253 and the steering wheel 254, sends operation information to the server apparatus 1, accepts vehicle-body position information which is calculated by the server apparatus 1, and properly proceeds with the game.

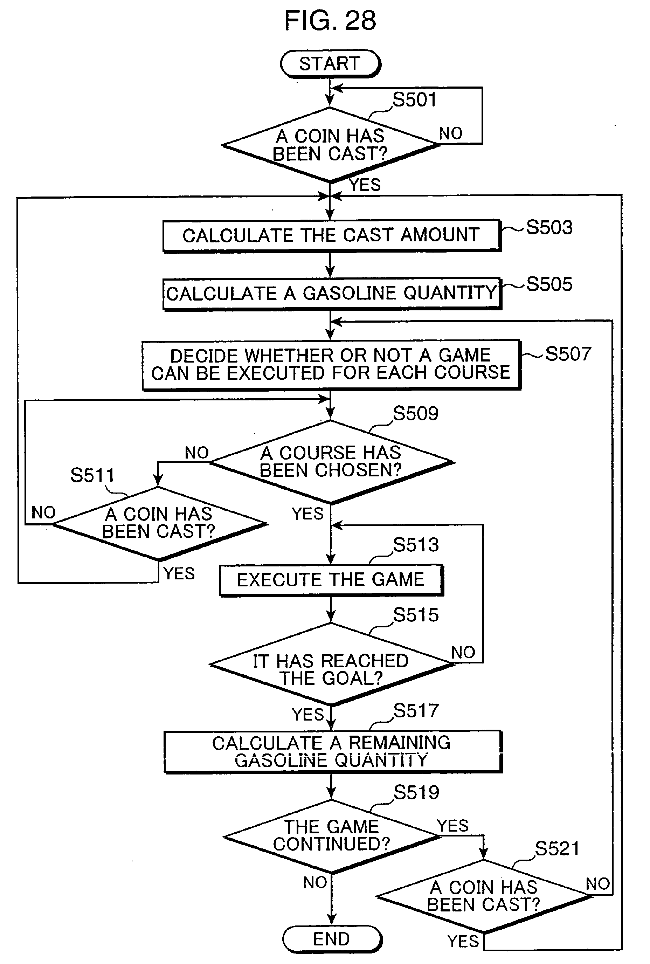

   Fig. 28 is a flow chart, showing an example of the operation of the client terminal apparatus 2. First, the cast-money calculation section 211p decides whether or not a coin has been cast into the coin acceptance section 27 (in a step S501). If the decision is made that no coin has been cast (NO at the step S501), the processing is put on standby. If the decision is made that a coin has been cast (YES at the step S501), the cast-money calculation section 211p calculates the cast sum of money (in a step S503).
   Then, the fuel giving section 211q calculates the quantity of fuel (or gasoline) which corresponds to the cast money that is calculated in the step S503 (in a step S505). Next, the game-execution decision section 211s decides whether or not the game can be executed using a course, according to whether or not the quantity of fuel which is given by the fuel giving section 211q for each of several courses that are stored in the course storage section 213p is equal to, or more than, the fuel consumption which is stored in the course storage section 213p (in a step S507).
   Sequentially, the game-execution decision section 211s displays, in the monitor 22, a course selection image (see Fig. 29) in which a course for running can be chosen. Then, it decides whether or not a choice for the course on which the decision was made that the game can be executed in the step S507 has been accepted via the touch panel 22a (in a step S509). If the decision is made that a choice for the course has not been accepted (NO at the step S509), the cast-money calculation section 211p decides whether or not a coin has been inserted into the coin acceptance section 27 (in a step S511). If the decision is made that no coin has been cast (NO at the step S511), the processing returns to the step S509 and the processing of the step S509 is repeated. If the decision is made that a coin has been cast (YES at the step S511), the processing returns to the step S503 and the processing of the step S503 to the step S509 is repeated.
   If the decision is made that a choice for the course has been accepted (YES at the step S509), the game execution section 211t executes the game in which a vehicle runs on the course which has been chosen at the step S509 (in a step S513). Then, the game execution section 211t decides whether or not all the automobiles in the game have reached the goal in the same game space (in a step S515). If the decision is made that one or more automobiles have not yet reached the goal (NO at the step S515), the processing returns to the step S513 and the game continues. If the decision is made that all the automobiles have reached the goal (YES at the step S515), the remaining-fuel calculation section 211r reads, from the course storage section 213p, the fuel consumption in the course where the automobile ran in the preceding game, and subtracts it from the remaining fuel quantity (in a step S517).
   Then, the game execution section 211t accepts an operation input via the touch panel 22a and decides whether the game should be continued (in a step S519). If the decision is made that the game should not be continued (NO at the step S519), the processing ends. If the decision is made that the game should be continued (YES at the step S519), the cast-money calculation section 211p decides whether or not a coin has been inserted into the coin acceptance section 27 (in a step S521). If the decision is made that no coin has been cast (NO at the step S521), the processing returns to the step S509 and the processing of the step S507 and its following steps is repeated. If the decision is made that a coin has been cast (YES at the step S521), the processing returns to the step S503 and the processing of the step S503 and its following steps is repeated.
   Fig. 29 is a representation, showing an example of a course selection image which is displayed in the monitor 22 in the step S507 of the flow chart shown in Fig. 28. In a course selection image 480, there are displayed in order from the image's left-hand: a course-information display section 481 for a drag race; a course-information display section 482 for a circuit race; and a course-information display section 483 for a road race. In each display section 481 to 483, there are displayed in order from above: a top view 481a to 483a of a course; course information 481b to 483b which indicates the course's whole length and the number of times (or the number of laps) at which a race is executed; required-fuel information 481c to 483c which indicates the quantity of fuel that is required for participating in each race; and participation possibility information 481d to 483d which indicates whether or not the quantity of fuel required for participating in each race still remains.
   For example, with respect to a circuit race, "1200m ×3 laps" is displayed at the course information 482b, which means a race where a vehicle makes three laps of a 1200-meter course. In the column of the required-fuel information 482c, "300ml" is displayed, which suggests that the quantity of fuel necessary for taking part in the race is 300ml. "Possible" is displayed at the participation possibility information 482d, thus allowing a player to become aware that the fuel remains so that the player can join.
   Herein, the column frame of each course-information display section 481 and 482 is shown by a thick line. This indicates that a player can take part in the race which is displayed in each course-information display section 481 and 482. Then, if the touch panel 22a in the corresponding position inside of this heavy line is pressed down, the drag-race course or the circuit-race course is chosen. Specifically, if the touch panel 22a within the area of the course-information display section 481 is pressed down, the drag-race course is chosen. On the other hand, if the touch panel 22a within the area of the course-information display section 482 is pressed down, the circuit-race course is chosen.
   As described above, according to whether or not the quantity of fuel which is given according to an inserted amount of money is equal to, or more than, a fuel consumption which is the quantity of fuel that is virtually consumed by the automobile when the automobile runs virtually along a course, a decision is made whether or not the game can be executed using the course. This setting of a charge satisfies a player.
   Furthermore, for each of several courses, according to whether or not the remaining quantity of fuel when the preceding game ends is equal to, or more than, a fuel consumption which is the quantity of fuel that is virtually consumed by the automobile when the automobile runs virtually along a course, a decision is made whether or not the game can be executed using the course. Therefore, even if the game is repeated, the setting of a charge which satisfies a player can be realized.
   Moreover, various courses which are each different in a fuel consumption are stored in the course storage section 213p, so that a player can consume fuel effectively. Therefore, the setting of a charge which satisfies a player further can be realized. In addition, every time a coin is inserted from the outside, the quantity of fuel is added. Therefore, if a player casts a coin as the need arises, the player can increase the quantity of fuel.
   Herein, in the above described embodiment, a case is described in which the cast-money calculation section 211p calculates a cast sum of money which is the amount of a coin that is cast into the coin acceptance section 27. However, another form may also be used in which a cast sum of money is calculated which is the amount of real money which is a real currency that is used in real life, or virtual money which is a game value that is used only in a game and can be exchanged for the real money.
   For example, as real money, a bank note, a prepaid card or the like may also be used, and as virtual money, a chip which is beforehand exchanged at a predetermined rate for the real money, or the like, may also be used. In that case, in the client terminal apparatus 2, instead of (or in addition to) the multi-coin selector 27a, a money accepting means has to be provided according to the form of real money or virtual money to be used.
(L) In this embodiment, a form is described in which a fuel consumption is calculated when a game starts and when the game ends. However, another form may also be used in which it is calculated in real time simultaneously with the game as it proceeds (an example of the embodiment which corresponds to claims 20 to 26). Hereinafter, a specific example will be described using Figs. 30 to 33.

Fig. 30 is a block diagram, showing an example of the functional configuration of the control section 21 of the client terminal apparatus 2. The CPU 211 includes: a cast-money calculation section 211u (which corresponds to the cast-money calculating means) which calculates a cast sum of money which is the amount of a coin that is cast into the coin acceptance section 27; a fuel giving section 211v (which corresponds to the fuel giving means) which gives the player the quantity of virtual fuel which corresponds to the cast money that is calculated by the cast-money calculation section 211p; a reference-mileage setting section 211x (which corresponds to the reference-mileage setting means) which sets a reference gas mileage DFS which is a gas mileage at the time when a vehicle moves on a predetermined reference condition; a gas-mileage calculation section 211y (which corresponds to the gas-mileage calculating means) which accepts an operation input for a vehicle from the outside at each predetermined interval and calculates a gas mileage using this operation input and the reference gas mileage DFS; a consumed-fuel calculation section 211z (which corresponds to the consumed-fuel calculating means) which calculates a fuel consumption which is the quantity of fuel that the vehicle virtually consumes using the gas mileage which is calculated by the gas-mileage calculation section 211y at each predetermined interval; a remaining-fuel calculation section 211α (which corresponds to the remaining-fuel calculating means) which adds the quantity of fuel which is given by the fuel giving section 211v, subtracts the fuel consumption which is calculated by the consumed-fuel calculation section 211z at each predetermined interval and calculates a remaining fuel quantity which is the remaining quantity of fuel; a game-execution decision section 211γ (which corresponds to the game-execution deciding means) which permits the player to execute the game, if the remaining fuel quantity which is calculated by the remaining-fuel calculation section 211 α is plus; and a game execution section 211t (which corresponds to the game executing means) which accepts an input from the touch panel 22a, the accelerator 251, the brake 252, the shift lever 253 and the steering wheel 254 and proceeds with the game.

Furthermore, the CPU 211 includes: a parameter determination section 211w (which corresponds to the parameter determining means) which accepts an input from the touch panel 22a and determines a parameter which determines the gas mileage of an automobile; a fuel display section 211β (which corresponds to the fuel displaying means) which displays the remaining fuel quantity in the monitor 22; and an operation-input acceptance section 211e which accepts an input from the touch panel 22a, the accelerator 251, the brake 252, the shift lever 253, the steering wheel 254 and the multi-coin selector 27a.

Moreover, the parameter determination section 211w includes: a vehicle-type selection section 211w1 (which corresponds to the vehicle selection section) which accepts an input from the touch panel 22a and selects a type of vehicle from among several types of vehicles which are stored in a vehicle-type storage section 213u1 (described later); and an engine selection section 211w2 (which corresponds to the formation-element selection section) which accepts an input from the touch panel 22a and selects a kind of engine from among a plurality of kinds of engines which are stored in an engine storage section 213u2 (described later).

The RAM 212 includes a remaining-quantity storage section 212u which stores the remaining quantity of fuel. The ROM 213 includes: a parameter storage section 213u (which corresponds to the parameter storing means) which stores a parameter which determines the gas mileage of a vehicle; and a course storage section 213v (which corresponds to the course storing means) which stores in advance a course condition (i.e., its slope and road-surface condition) so that it corresponds to a position in each course of a plurality of courses.

In addition, the parameter storage section 213u includes a vehicle-type storage section 213u1 (which corresponds to the vehicle storage section) which stores in advance identification information on a plurality of kinds of vehicles, and an engine storage section 213u2 (which corresponds to the formation-element storage section) which stores in advance identification information on a plurality of kinds of engines.

The cast-money calculation section 211u calculates a cast sum of money which is the amount of a coin that is cast into the coin acceptance section 27. Specifically, the cast-money calculation section211u accepts a detection result from the multi-coin selector 27a, and identifies the kind (or the amount) of a coin that is cast into the coin acceptance section 27. Thereby, it calculates a cast sum of money. Besides, if several coins are cast into the coin acceptance section 27, the cast-money calculation section 211u calculates and adds the cast sum of money based on the kinds of coins, so that the total cast amount of money can be calculated.

The fuel giving section 211v gives the player the quantity of virtual fuel which corresponds to the cast money that is calculated by the cast-money calculation section 211p. Herein, for example, if a cast sum of money is 100 yen, fuel (or gasoline) is given by a quantity of 500 ml, and fuel is given in proportion to a cast amount of money.

The vehicle-type selection section 211w1 accepts an input from the touch panel 22a and selects a type of vehicle from among several types of vehicles which are stored in the vehicle-type storage section 213u1. The engine selection section 211w2 accepts an input from the touch panel 22a and selects a kind of engine from among a plurality of kinds of engines which are stored in the engine storage section 213u2.

The reference-mileage setting section 211x sets a reference gas mileage DFS which is a gas mileage at the time when a type of automobile which is chosen by the vehicle-type selection section 211w1 moves on a predetermined reference condition and a fuel consumption DFSO per unit time when the automobile is stopped, in a state where it is provided with an engine which is chosen by the engine selection section 211w2. Herein, the reference condition is the following three conditions to be met.
(1) The revolution rate of an engine is 6800 rpm.
(2) The slope of a road surface is 0 %.
(3) A road surface is a paved and dry road surface.

The gas-mileage calculation section 211y calculates a gas mileage by correcting the reference gas mileage DFS, based on the revolution rate of an engine which is calculated by the vehicle-body position calculation section 111b of the server apparatus 1, using an operation input from the accelerator 251 or the like which is accepted by the operation-input acceptance section 211e, and the road-surface slope and road-surface condition of a course which are read from the course storage section 213v according to the position of a vehicle body inside of the course which is calculated by the vehicle-body position calculation section 111b of the server apparatus 1, at predetermined intervals ΔT (herein, at intervals of 1/60 msec).

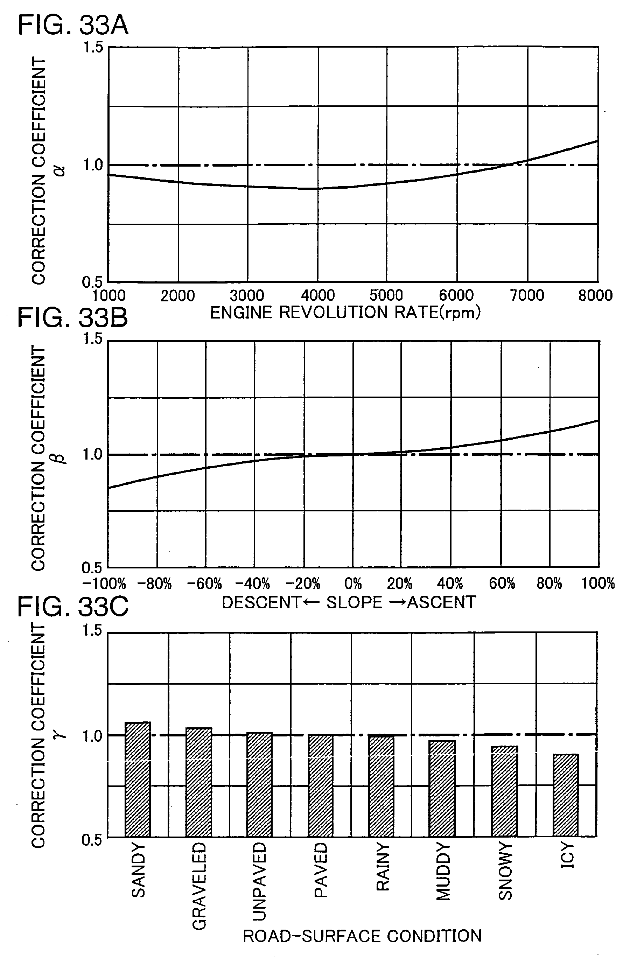

More specifically, at the predetermined intervals ΔT (herein, at intervals of 1/60 msec), the gas-mileage correction coefficients α, β, γ which are each determined according to the revolution rate of an engine and the road-surface slope and road-surface condition of a course are calculated, using a preset correlation formula or table (see Fig. 33). Then, the reference gas mileage DFS is divided by the gas-mileage correction coefficients α, β, γ, so that a gas mileage can be calculated.

The consumed-fuel calculation section 211z calculates a fuel consumption which is the quantity of fuel that the automobile virtually consumes using the gas mileage which is calculated by the gas-mileage calculation section 211y at the predetermined intervals ΔT (herein, at intervals of 1/60 msec).

More specifically, at the predetermined intervals ΔT (=1/60 msec), the consumed-fuel calculation section 211z obtains vehicle-body position information from the vehicle-body position calculation section 111b of the server apparatus 1. Then, it calculates a movement distance ΔL of the automobile and divides the movement distance ΔL by the gas mileage which is calculated by the gas-mileage calculation section 211y. Thereby, a fuel consumption ΔFE can be calculated.

Herein, if such a fuel consumption ΔFE calculated as described above is less than a preset minimum fuel consumption ΔFE2, the minimum fuel consumption ΔFE2 is used as the fuel consumption ΔFE.

The remaining-fuel calculation section 211 α adds the quantity of fuel which is given by the fuel giving section 211v, every time a cast amount of money is calculated by the cast-money calculation section 211p (every time a coin is cast into the coin acceptance section 27). Then, while the game is in execution, at the predetermined intervals ΔT (=1/60 msec), it subtracts the fuel consumption which is calculated by the consumed-fuel calculation section 211z. Next, it calculates a remaining fuel quantity FE which is the remaining quantity of fuel and stores it in the remaining-quantity storage section 212u.

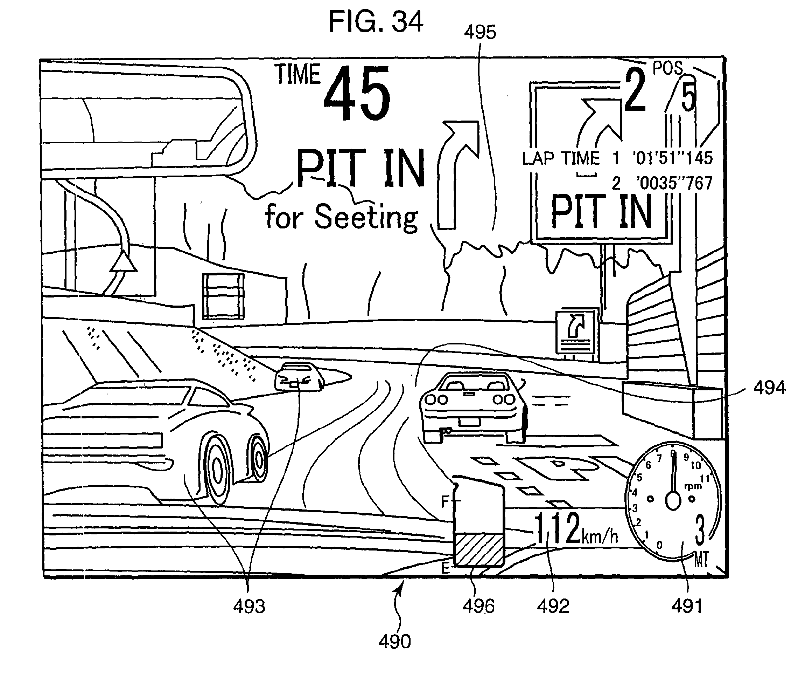

The fuel display section 211β reads the remaining fuel quantity of a virtual automobile from the remaining-quantity storage section 212u and displays it in the monitor 22 at the predetermined intervals ΔT (=1/60 msec) (see Fig. 34).

The game-execution decision section 211γ permits the player to execute the game, if the remaining fuel quantity FE which is calculated by the remaining-fuel calculation section 211α is plus. In addition, if the remaining fuel quantity FE is equal to, or less than, a predetermined value FE0 (e.g., 10 ml), then it displays, in the monitor 22, information for prompting the player to cast a coin so that the player can continue the game (e.g., a message that "Only a little gasoline remains. Insert a coin."). Herein, in timing when the remaining fuel quantity FE which is calculated by the remaining-fuel calculation section 211 α is "0", game-execution decision section 211γ outputs, to a game execution section 211δ, instruction information that the game is terminated.

The game execution section 211δ proceeds with the game, using an operation input which is accepted by the operation-input acceptance section 211e. Specifically, the game execution section 211δ accepts operation input which is accepted by the operation-input acceptance section 211e and vehicle-body position information which is calculated by the server apparatus 1. Then, it suitably proceeds with the game.

The operation-input acceptance section 211e accepts an input from the touch panel 22a, the accelerator 251, the brake 252, the shift lever 253 and the steering wheel 254. Then, it sends the operation information it has accepted to the server apparatus 1 and the game execution section 211δ.

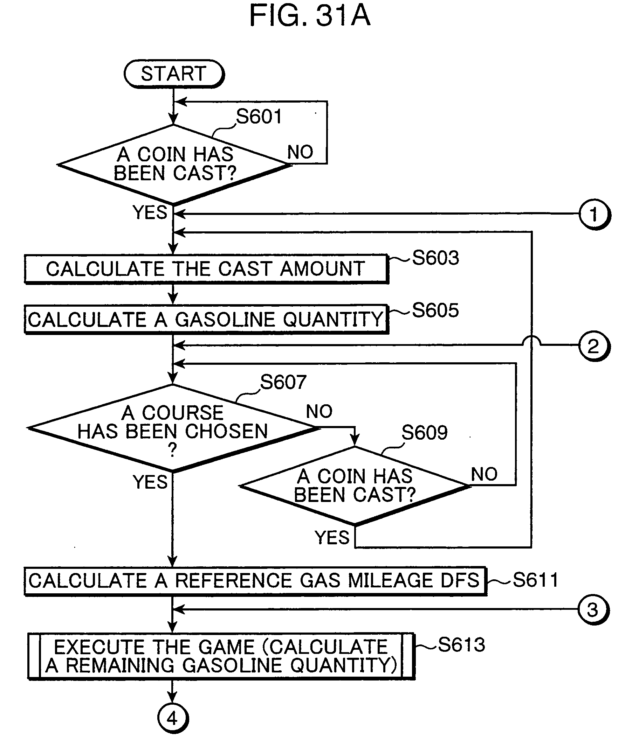

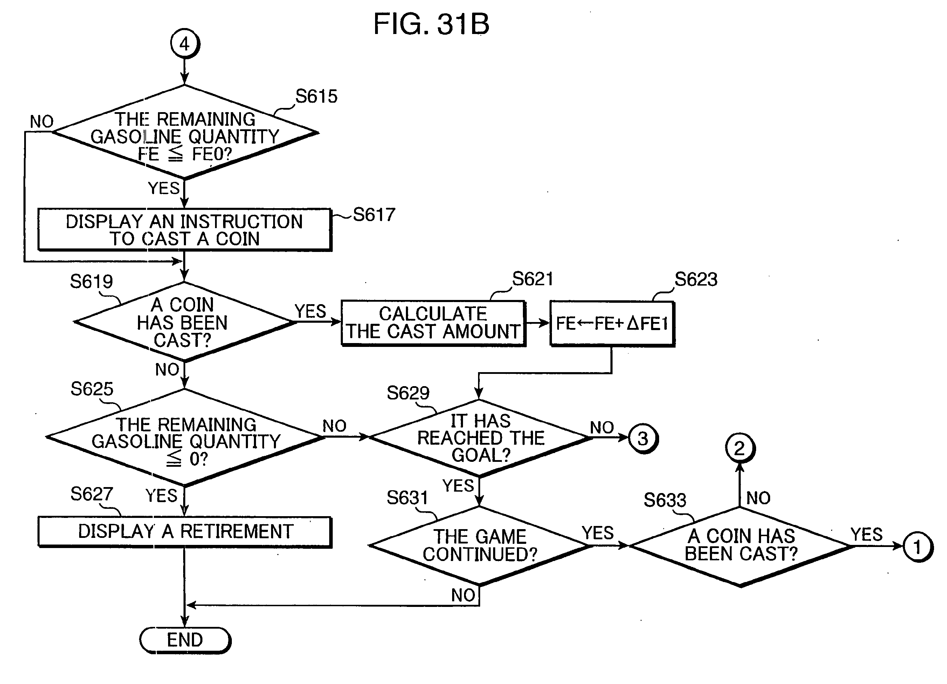

Figs. 31A and 31B are a flow chart, showing an example of the operation of the client terminal apparatus 2. Herein, a choice is already made for an automobile (i.e., a vehicle type) and an engine by the vehicle-type selection section 211w1 and the engine selection section 211w2. First, the cast-money calculation section 211u decides whether or not a coin has been cast into the coin acceptance section 27 (in a step S601). If the decision is made that no coin has been cast (NO at the step S601), the processing is put on standby. If the decision is made that a coin has been cast (YES at the step S601), the cast-money calculation section 211u calculates the cast sum of money (in a step S603).

Then, the fuel giving section 211v calculates the quantity of fuel (or gasoline) which corresponds to the cast money that is calculated in the step S603 (in a step S605). Next, the game-execution decision section 211s displays, in the monitor 22, a course selection image in which a course for running can be chosen. Then, it decides whether or not a course choice has been accepted via the touch panel 22a (in a step S607). If the decision is made that a choice for the course has not been accepted (NO at the step S607), the cast-money calculation section 211u decides whether or not a coin has been inserted into the coin acceptance section 27 (in a step S609). If the decision is made that no coin has been cast (NO at the step S609), the processing returns to the step S607 and the processing of the step S607 is repeated. If the decision is made that a coin has been cast (YES at the step S609), the processing returns to the step S603 and the processing of the step S603 to the step S607 is repeated.

If the decision is made that a choice for the course has been accepted (YES at the step S607), the reference-mileage setting section 211x sets the reference gas mileage DFS which is a gas mileage at the time when an automobile moves on a predetermined reference condition (in a step S611). Then, using the course which has been chosen at the step S607, the game execution section 211δ executes the game. In addition, at the predetermined intervals ΔT (=1/60 msec), the remaining-fuel calculation section 211α or the like calculates a remaining fuel quantity (or a remaining gasoline quantity FE) which is the remaining quantity of fuel (in a step S613).

Next, the game-execution decision section 211γ decides whether or not the remaining gasoline quantity FE is equal to, or less than, the predetermined value FE0 (e.g., 10 ml) (in a step S615). Unless the decision is made that it is equal to, or less than, the predetermined value FE0 (NO at the step S615), the processing goes to a step S619. If the decision is made that it is equal to, or less than, the predetermined value FE0 (YES at the step S615), the game-execution decision section 211γ displays, in the monitor 22, information for prompting the player to cast a coin so that the player can continue the game (in a step S617).

If it is NO at the step S615, or if the processing of the step S617 is completed, the cast-money calculation section 211u decides whether or not a coin has been cast into the coin acceptance section 27 (in a step S619). If the decision is made that no coin has been cast (NO at the step S619), the processing moves forward to a step S625. If the decision is made that a coin has been cast (YES at the step S619), the cast-money calculation section 211u calculates the cast sum of money (in a step S621). Then, the fuel giving section 211v calculates a quantity ΔFE1 of fuel (or gasoline) which corresponds to the cast money that is calculated in the step S621. Sequentially, the remaining-fuel calculation section 211α adds quantity ΔFE1 of fuel (or gasoline) which corresponds to the cast money and calculates the remaining fuel quantity FE (in a step S623). Then, the processing moves ahead to a step S629.

If the decision is made that no coin has been inserted (NO at the step S619), the game-execution decision section 211γ decides whether or not the remaining fuel quantity FE is equal to, or less than, "0" (in a step S625). If the decision is made that the remaining fuel quantity FE is not equal to, or less than, "0" (NO at the step S625), or if the processing of the step S623 is completed, then the game execution section 211δ decides whether or not all the automobiles in the game have reached the goal in the same game space (in a step S629). If the decision is made that one or more automobiles have not yet reached the goal (NO at the step S629), the processing returns to the step S623, and the processing of the step S623 and its following steps is repeated. If the decision is made that all the automobiles have reached the goal (YES at the step S629), the game execution section 211δ accepts an input from the touch panel 22a or the like and decides whether or not the game should be continued (in a step S631).

If the decision is made that the game should not be continued (NO at the step S631), the processing is terminated. If the decision is made that the game should be continued (YES at the step S631), the cast-money calculation section 211u decides whether or not a coin has been cast into the coin acceptance section 27 (in a step S633). If the decision is made that no coin has been cast (NO at the step S633), the processing returns to the step S607, and the processing of the step S607 and its following steps is repeated. If the decision is made that a coin has been inserted (YES at the step S633), the processing returns to the step S603, and the processing of the step S603 and its following steps is repeated. On the other hand, at the step S625, if the decision is made that the remaining fuel quantity FE is equal to, or less than, "0" (YES at the step S625), then information that the remaining fuel quantity FE has been consumed so that the game comes to an end is displayed in the monitor 22 (in a step S627). Then, the processing is terminated

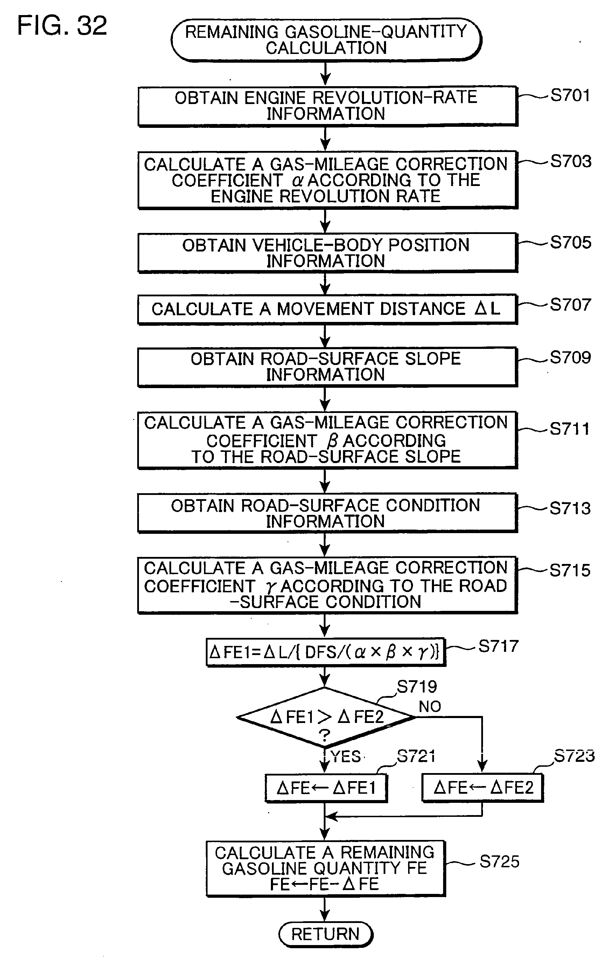

Fig. 32 is a flow chart, specifically showing an example of a remaining gasoline-quantity calculation processing in the step S613 of the flow chart shown in Figs. 31A and 31B. First, the gas-mileage calculation section 211y obtains revolution-rate information on an engine which is calculated by the vehicle-body position calculation section 111b of the server apparatus 1 (in a step S701). Then, the gas-mileage calculation section 211y calculates the gas-mileage correction coefficient α which corresponds to the revolution rate of an engine that is obtained at the step S701 (in a step S703). Next, the gas-mileage calculation section 211y obtains vehicle-body position information which is calculated by the vehicle-body position calculation section 111b of the server apparatus 1 (in a step S705). Then, the gas-mileage calculation section 211y calculates a movement distance ΔL, using the vehicle-body position information that is obtained at the step S705 (in a step S707).

Next, the gas-mileage calculation section 211y obtains position information on a vehicle body inside of a course which is calculated by the vehicle-body position calculation section 111b of the server apparatus 1. Then, according to the position inside of the course, it reads the road-surface slope of the course from the course storage section 213v (in a step S709). Sequentially, the gas-mileage calculation section 211y calculates the gas-mileage correction coefficient β which corresponds to the slope of a road surface that is read at a step S710 (in a step S711). Next, the gas-mileage calculation section 211y position information on a vehicle body inside of a course which is calculated by the vehicle-body position calculation section 111b of the server apparatus 1. Then, according to the position inside of the course, it reads the road-surface condition of the course from the course storage section 213v (in a step S713). Sequentially, the gas-mileage calculation section 211y calculates the gas-mileage correction coefficient γ which corresponds to the road-surface condition of a road surface that is read at the step S713 (in a step S715).

Next, the gas-mileage calculation section 211y divides the reference gas mileage DFS by the gas-mileage correction coefficients α, β, γ, so that a gas mileage can be calculated. Then, the consumed-fuel calculation section 211z divides the movement distance ΔL by this gas mileage, so that a fuel consumption ΔFE1 can be calculated (in a step S717). Sequentially, a decision is made whether or not the fuel consumption ΔFE1 is more than the minimum fuel consumption ΔFE2 (in a step S719). If the decision is made that the fuel consumption ΔFE1 is more than the minimum fuel consumption ΔFE2, the fuel consumption ΔFE1 which has been calculated at the step S717 is applied as the fuel consumption ΔFE (in a step S721). If the decision is made that the fuel consumption ΔFE1 is not more than the minimum fuel consumption ΔFE2 (i.e., the fuel consumption ΔFE1 is equal to, or less than, the minimum fuel consumption ΔFE2), the minimum fuel consumption ΔFE2 is applied as the fuel consumption ΔFE (in a step S723).

Then, the remaining-fuel calculation section 211α subtracts the fuel consumption ΔFE which has been calculated at the step S721 or the step S723 from a remaining fuel quantity FE which is stored in the remaining-quantity storage section 212u. Thereby, the remaining fuel quantity FE which is the remaining quantity of fuel can be calculated, and then, is updated and stored in the remaining-quantity storage section 212u (in a step S725). Then, the fuel display section 211 β updates the remaining fuel quantity FE which is displayed in the monitor 22 (see Fig. 34), and the processing is returned.

Figs. 33A, 33B, 33C are each a graphical representation, showing an example of the correlation between the revolution rate of an engine, the road-surface slope and the road-surface condition of a course, and gas-mileage correction coefficients α, β, γ, respectively. In Fig. 33A, the horizontal axis is the revolution rate of an engine and the vertical horizontal axis is the value of the gas-mileage correction coefficient α. In Fig. 33B, the horizontal axis is the road-surface slope of a course and the vertical horizontal axis is the value of the gas-mileage correction coefficient β. In Fig. 33C, the horizontal axis is the road-surface condition of a course and the vertical horizontal axis is the value of the gas-mileage correction coefficient γ.

As shown in Fig. 33A, the gas-mileage correction coefficient α is below "1", if the revolution rate of an engine is less than 6800 rpm. If the revolution rate of an engine is more than 6800 rpm, it exceeds "1". Besides, when revolution rate of an engine is at 4000 rpm, the gas-mileage correction coefficient α is minimum.

As shown in Fig. 33B, the gas-mileage correction coefficient β is below "1", if the slope of a road surface is a descent (i.e., less than 0 %). If the slope of a road surface is an ascent (i.e., more than 0 %), the gas-mileage correction coefficient β is above "1". Besides, the gas-mileage correction coefficient β increases monotonously as the slope's value becomes larger. As shown in Fig. 33C, the value of the gas-mileage correction coefficient γ is preset according to the condition of a road surface, so that a paved road corresponds to its reference value (γ=1). For example, in the case of a graveled road, the gas-mileage correction coefficient γ is 1.05, while the gas-mileage correction coefficient γ is 0.9 if a road is covered with snow.

Fig. 34 is a representation, showing an example of a game image which is displayed in the monitor 22 of the client terminal apparatus 2 while the game is in execution. In a game image 490, similarly to the game image 450, there are displayed: at the image's lower-right part, a tachometer display section 491 which displays a tachometer; on the left side of the tachometer display section 491, a speed display section 492 which displays a speed; an another-vehicle display section 493 which displays an image that illustrates the external appearance of another vehicle; a course-image display section 494 which displays the image of a course; and a background-image display section 495 which displays a background image. Besides, in the game image 490, on the left side of the speed display section 492, a remaining gasoline-quantity display section 496 which displays the remaining gasoline quantity FE. In the remaining gasoline-quantity display section 496, the remaining gasoline quantity FE is displayed so as to be viewed and confirmed. Thereby, based on the remaining gasoline quantity FE, a player can estimate the distance by which the player's automobile can run from now, or how long the player can continue playing the game. This is more convenient for a player.

As described above, if the remaining gasoline quantity FE is positive, a player is given a permission to play a game. Therefore, the player can continue playing until the game the remaining gasoline quantity FE becomes zero, and thus, the setting of a charge which satisfies a player can be realized.

In addition, at the predetermined intervals ΔT (=1/60 msec), a gas mileage is calculated using a reference gas mileage which is a gas mileage at the time when an automobile runs on a predetermined reference condition, and an operation input (herein, the revolution rate of an engine which is determined according to an operation input) for the automobile from the outside. Using this gas mileage, a fuel consumption is calculated which is the quantity of fuel that the automobile virtually consumes. Therefore, an appropriate fuel consumption can be calculated according to an operation input. Furthermore, a gas mileage is also calculated using a course condition (herein, a road-surface slope and a road-surface condition which corresponds to the automobile's position inside of a course. This helps calculate a fuel consumption more properly.

### Industrial Applicability

In the computer-readable recording medium in which the game money-charging program is recorded according to the present invention, a charged amount of money is calculated based on the quantity of fuel which is virtually consumed, and this charge setting can satisfy a player. For example, if the charged amount is calculated substantially in proportion to the quantity of fuel which is virtually consumed, such a charge setting becomes acceptable to the player.

## Claims

1. A computer-readable recording medium in which a game money-charging program is recorded, the game money-charging program charging a player a sum of money for a game in which a vehicle that virtually consumes fuel is moved in a game space, **characterized in that** a computer is rendered to function as:
a distance calculating means for calculating a distance by which the vehicle moves along a predetermined route that is set in advance in the game space;
a gas-mileage calculating means for calculating a gas mileage of the vehicle; and
a charged-money calculating means for calculating the quantity of fuel which is virtually consumed by dividing the gas mileage into the movement distance and calculating a charged sum of money based on this quantity of fuel.

2. The computer-readable recording medium in which the game money-charging program is recorded according to claim 1, **characterized in that**:
the computer is rendered to function further as a remaining-quantity storing means for storing the remaining quantity of fuel; and
the charged-money calculating means calculates a charged sum of money, using the remaining quantity of fuel when the preceding game ends.

3. The computer-readable recording medium in which the game money-charging program is recorded according to claim 2, **characterized in that**:
the computer includes a monitor; and
the computer is rendered to function further as a fuel displaying means for displaying the remaining quantity of fuel in the monitor.

4. The computer-readable recording medium in which the game money-charging program is recorded according to any one of claims 1 to 3, **characterized in that**:
the computer is rendered to function further as a parameter storing means for storing a parameter which determines the gas mileage of the vehicle, and a parameter determining means for accepting an input from the outside and determining the parameter; and
the gas-mileage calculating means calculates the gas mileage, using the parameter which is determined by the parameter determining means.

5. The computer-readable recording medium in which the game money-charging program is recorded according to claim 4, **characterized in that**:
the parameter storing means includes a vehicle storage section which stores in advance identification information on a plurality of kinds of vehicles;
the parameter determining means includes a vehicle selection section which accepts an input from the outside and selects a kind of vehicle from among the plurality of kinds of vehicles which are stored in the vehicle storage section; and
the gas-mileage calculating means calculates the gas mileage based on the kind of vehicle which is selected by the vehicle selection section.

6. The computer-readable recording medium in which the game money-charging program is recorded according to claim 5, **characterized in that**:
the parameter storing means includes a formation-element storage section which stores in advance identification information on a plurality of kinds of vehicle formation elements, with respect to at least one vehicle formation element among a plurality of vehicle formation elements which form the vehicle;
the parameter determining means includes a formation-element selection section which accepts an input from the outside and selects a kind of formation element from among the plurality of kinds of formation elements which are stored in the formation-element storage section; and
the gas-mileage calculating means calculates the gas mileage based on the kind of formation element which is selected by the formation-element selection section.

7. The computer-readable recording medium in which the game money-charging program is recorded according to claim 6, **characterized in that** in the formation-element selection section, a selectable kind of vehicle formation element is set in advance according to the kind of vehicle which is selected by the vehicle selection section.

8. The computer-readable recording medium in which the game money-charging program is recorded according to any one of claims 1 to 7, **characterized in that** the gas-mileage calculating means accepts, from the outside, an operation input for determining the direction in which the vehicle moves and the speed at which the vehicle moves and calculates the gas mileage based on this operation input.

9. The computer-readable recording medium in which the game money-charging program is recorded according to any one of claims 1 to 8, **characterized in that**:
the computer is rendered to function further as a fuel storing means for storing in advance identification information on the kind of fuel which is virtually consumed in the vehicle, and a fuel selecting means for accepting an input from the outside and selecting a kind of fuel from among a plurality of kinds of fuels which are stored in the fuel storing means; and
the charged-money calculating means calculates a charged sum of money based on the kind of fuel which is selected by the fuel selecting means.

10. The computer-readable recording medium in which the game money-charging program is recorded according to any one of claims 1 to 9 **characterized in that**:
the computer is rendered to function further as a course storing means for storing in advance route information on a plurality of courses, and a course selecting means for accepting an input from the outside and selecting a course from among the plurality of courses; and
the distance calculating means calculates a movement distance along the route of the selected course.

11. The computer-readable recording medium in which the game money-charging program is recorded according to claim 10, **characterized in that** the course storing means stores route information on a plurality of courses which each have a different distance from a starting point to a goal point.

12. The computer-readable recording medium in which the game money-charging program is recorded according to claim 9 or 10, **characterized in that** the charged-money calculating means calculates a charged sum of money, based on the course which is selected by the course selecting means.

13. The computer-readable recording medium in which the game money-charging program is recorded according to any one of claims 10 to 12 **characterized in that**:
the computer includes a monitor; and
the course selecting means displays the plurality of courses in the monitor so that a choice can be made.

14. The computer-readable recording medium in which the game money-charging program is recorded according to any one of claims 1 to 13 **characterized in that**:
the computer is rendered to function further as a game executing means for executing the game, a cast-money calculating means for calculating a sum of money which is the amount of a coin that is cast from the outside, and a money deciding means for deciding whether or not the cast money is equal to, or more than, the charged money; and
if the money deciding means decides that the cast money is equal to, or more than, the charged money, then the game executing means permits executing the game.

15. A computer-readable recording medium in which a game money-charging program is recorded, the game money-charging program charging a player a sum of money for a game in which a vehicle is virtually moved in a game space, **characterized in that** a computer is rendered to function as:
a movable-distance calculating means for calculating a distance by which the vehicle can move per a predetermined unit charged money in the game space; and
a charged-money calculating means for calculating an accumulative distance by which the vehicle moves from the start of the game in the game space and calculating a charged sum of money using this accumulative movement distance and the movable distance.

16. A video game apparatus which executes a game in which a vehicle that virtually consumes fuel is moved in a game space, **characterized by** including:
a distance calculating means for calculating a distance by which the vehicle moves along a predetermined route that is set in advance in the game space;
a gas-mileage calculating means for calculating a gas mileage of the vehicle; and
a charged-money calculating means for calculating the quantity of fuel which is virtually consumed by dividing the gas mileage into the movement distance and calculating a charged sum of money based on this quantity of fuel.

17. A computer-readable recording medium in which a game money-charging program is recorded, the game money-charging program charging a player a sum of money for a game in which a vehicle that virtually consumes fuel is virtually moved along a course which is selected from among a plurality of courses that are set in a game space, **characterized in that** a computer is rendered to function as:
a cast-money calculating means for calculating a cast sum of money which is the amount of real money which is a real currency that is cast from the outside or virtual money as a game value which is used only in the game and can be exchanged for the real money;
a fuel giving means for giving the player the quantity of virtual fuel which corresponds to the cast money;
a course storing means for storing a fuel consumption which is the quantity of fuel that the vehicle virtually consumes when the vehicle is virtually moved along a course, so that the fuel consumption corresponds to each of a plurality of courses; and
a game-execution deciding means for deciding whether or not the game can be executed using a course, according to whether or not the quantity of fuel which is given by the fuel giving means for each course is equal to, or more than, the fuel consumption which is stored in the course storing means.

18. The computer-readable recording medium in which the game money-charging program is recorded according to claim 17, **characterized in that**:
the computer is rendered to function further as a remaining-fuel calculating means for reading, from the course storing means, a fuel consumption in the course where the vehicle was moved in the preceding game, subtracting the fuel consumption from the quantity of fuel which is given by the fuel giving means , and calculating the remaining quantity of fuel when the preceding game ends; and
the game-execution deciding means decides whether or not the game can be executed, according to whether or not the remaining quantity of fuel at the end of the preceding game which is calculated by the remaining-fuel calculating means for each of the plurality of courses is equal to, or more than, the fuel consumption in the corresponding course which is stored in the course storing means.

19. The computer-readable recording medium in which the game money-charging program is recorded according to claim 17 or 18, **characterized in that** the remaining-fuel calculating means adds the quantity of fuel which is given by the fuel giving means, every time the real money or virtual money is cast from the outside.

20. A computer-readable recording medium in which a game money-charging program is recorded, the game money-charging program charging a player a sum of money for a game in which a vehicle that virtually consumes fuel is virtually moved in a game space, **characterized in that** a computer is rendered to function as:
a cast-money calculating means for calculating a cast sum of money which is the amount of real money which is a real currency that is cast from the outside or virtual money as a game value which is used only in the game and can be exchanged for the real money;
a fuel giving means for giving the player the quantity of virtual fuel which corresponds to the cast money;
a reference-mileage setting means for setting a reference gas mileage as the gas mileage at the time when the vehicle moves on a predetermined reference condition;
a gas-mileage calculating means for accepting an operation input for the vehicle from the outside at each predetermined interval and calculating a gas mileage using this operation input and the reference gas mileage;
a consumed-fuel calculating means for calculating a fuel consumption as the quantity of fuel which the vehicle virtually consumes using the gas mileage which is calculated by the gas-mileage calculating means at each predetermined interval;
a remaining-fuel calculating means for adding the quantity of fuel which is given by the fuel giving means, subtracting the fuel consumption which is calculated by the consumed-fuel calculating means at each predetermined interval and calculating a remaining fuel quantity as the remaining quantity of fuel; and
a game-execution deciding means for permitting the player to execute the game, if the remaining fuel quantity is plus.

21. The computer-readable recording medium in which the game money-charging program is recorded according to claim 20, **characterized in that**:
the computer is rendered to function further as a course storing means for storing a course condition which corresponds to a position in a course; and
the gas-mileage calculating means reads, from the course storing means, a course condition which corresponds to a position of the vehicle in a course at each predetermined interval and calculates a gas mileage, also using this course condition.

22. The computer-readable recording medium in which the game money-charging program is recorded according to claim 20 or 21, **characterized in that**:
the computer includes a monitor; and
the computer is rendered to function further as a fuel displaying means for displaying the remaining fuel quantity in the monitor.

23. The computer-readable recording medium in which the game money-charging program is recorded according to claim 22, **characterized in that** if the remaining fuel quantity is equal to, or less than, a predetermined value, then the game-execution deciding means displays, in the monitor, information which prompts the player to cast the real money or virtual money so that the player can continue executing the game.

24. The computer-readable recording medium in which the game money-charging program is recorded according to any one of claims 21 to 23, **characterized in that**:
the computer is rendered to function further as a parameter storing means for storing a parameter which determines the reference gas mileage, and a parameter determining means for accepting an input from the outside and determining the parameter; and
the reference-mileage setting means calculates the reference gas mileage, using the parameter which is determined by the parameter determining means.

25. The computer-readable recording medium in which the game money-charging program is recorded according to claim 24, **characterized in that**:
the parameter storing means includes a vehicle storage section which stores in advance identification information on a plurality of kinds of vehicles;
the parameter determining means includes a vehicle selection section which accepts an input from the outside and selects a kind of vehicle from among the plurality of kinds of vehicles which are stored in the vehicle storage section; and
the reference-mileage setting means calculates the reference gas mileage based on the kind of vehicle which is selected by the vehicle selection section.

26. The computer-readable recording medium in which the game money-charging program is recorded according to claim 25, **characterized in that**:
the parameter storing means includes a formation-element storage section which stores in advance identification information on a plurality of kinds of vehicle formation elements, with respect to at least one vehicle formation element among a plurality of vehicle formation elements which form the vehicle;
the parameter determining means includes a formation-element selection section which accepts an input from the outside and selects a kind of formation element from among the plurality of kinds of formation elements which are stored in the formation-element storage section; and
the reference-mileage setting means calculates the reference gas mileage based on the kind of formation element which is selected by the formation-element selection section.
